# EUROPÄISCHE PATENTANMELDUNG

(11) **EP 0 955 132 A2**
(43) Veröffentlichungstag der Anmeldung: **10.11.1999**
(21) Anmeldenummer: 99108907.9
(22) Anmeldetag: 05.05.1999
(51) Int. Cl.: B25J 9/08, B25J 9/00

(54) **Multiblock robot system**

(30) Priorität: 06.05.1998 DE 19820110
(71) Anmelder: Kochanneck, Uwe, 44023 Dortmund (DE)
(72) Erfinder: Kochanneck, Uwe, 44023 Dortmund (DE)

(57) **Zusammenfassung**

Bei einem Multiblock-Robot System sollen die Vorteile der flexiblen Multiachsen-Robot Systeme und Robot-Systemzellen, dadurch genutzt werden, daß elektronische und elektrische E-POOL Netzwerke gebildet werden, bestehend aus Multiblock- Individual Computereinheiten (3-16), Zentralcomputern (3-17), Bordcomputern (9'-1), Satelliteneinheiten (9'-32), Antenneneinheiten (9'-3), offenen und berührungsgeschützten Unterboden- und Überboden Strom- und Kommunikationszuführungen (3-11), (3-12),(3-20) mit internen Kontrollpunkt-Kennungsträgern (3-10), Positions- und Richtungscode-Bahnführungen (3-5) die auf die Fahrbahnoberfläche und identisch dazu auf die Oberseite der berührungsgeschützten Strom- und Kommunikationszuführungen (3-11),(3-12) in metallisierter Dünnschichtlackierung und metallisierten Dünnschicht-Aufklebefolien, mit integrierten Induktivleiterstreifen (3-8) und Positions-, Richtungscode-, und Kontrollpunkt-Kennungsträgern (3-9),)(3-10) aufgetragen sind und die über Multiblock-Robot Normteil (2-1) interne Strom- und Kommunikationsleitungen (3-21),(3-22),(3-24), über Dachsolareinheiten (9'-25), Segmentsolareinheiten (9'-26), Solar- und Windkraftanlagen (1-21), sowie über batterieversorgende E-STOPS, weitgehend energieautonom sind und daß im gegenseitigen Datenaustausch zueinander, gesteuert und energierversorgt von den elektronischen und elektrischen E-POOL Netzwerken, ein selbstoperierender E-POOL Verbund gebildet wird, der Multiblock-Transportroboter (1-1), Straßenoperationsroboter (1-2), Serviceroboter (1-3), Multiblock-Robot Servicefahrzeuge (1-14),Verkehrs-, und Transportbaugruppen mit Individual PKW's und Kleintransportern (1-4), Schwerlaststraßentransporter und Busse (1-5) und Schiene-Straße Transporter (1-6), Verteilbaugruppen mit verfahrbaren Produktions- und Zusammenstellungsbaugruppen (1-8), Zustell- und Direktentnahme-Baugruppen (1-10),(1-11), verfahrbare und stationäre Kühl- und Verteilboxen (1-12),(1-13), sowie stationäre Produktions- und Zusammenstellungsbaugruppen (1-17), (1-23) umfaßt, daß von E-POOL Benutzern über die E-POOL Computereinheiten (3-16) und hierzu kompatiblen Computern, mit E-POOL Bestellsoftware, Bestellungen und Aufträge, Leistungen und Lieferungen an die E-POOL Zentralcomputer (3-17) übermittelt weiden, die durch den seibstoperierenden E-POOL Verbund produziert, zusammengestellt, verteilt, transportiert und zielpunktgenau bis zum Firmengelände, dem Institutionsgebäude, der Hausetage, der Privat-Wohnung geliefert und an jedem anderen, bestellten Zielpunkt bereitgestellt werden.

## Beschreibung

Die Erfindung betrifft ein Multiblock-Robot System für eine vollkommen selbstoperierende Produktions, Verkehrs-, Transport- und Verteillogistik. Gemäß EP 0477725 B1, EP 0547421 B1, DE 195 17 852 A1 und DE 196 15 943.1, DE 196 21 668 A1 sind Multiblock-Robot Systeme bekannt. Diese erbringen den Vorteil, daß zielgerichtete Robot-Gesamtsysteme zu standardisierten, annähernd baugleichen Multiblock-Normteilen aufgelöst werden, die mit minimalem Aufwand in Entwicklung und Konstruktion erstellt werden können und mit wenigen Handgriffen von den Anwendern selbst für das ursprünglich angestrebte Wirkungsspektrum einsetzbar und untereinander austauschbar sind und außerdem zu anderen Robot-Systemlösungen zusammengesteckt werden können. Weiterhin sind Verschieberegalanordnungen mit Arbeitseinheiten und Roboter Systemzellen gemäß DE 25 19 864, DE 25 27 150, DE 26 54 194, DE 29 38 227 und EP 0306787 bekannt, die den Vorteil einer optimalen Raumnutzung mit kurzen Bedienwegen erbringen.

Aufgabe der vorliegenden Erfindung ist es, durch die Einführung einer minimierten Anzahl zusätzlicher Multiblock-Normteile und Integration der Verschieberegalanordnungen mit Arbeitseinheiten und Roboter Systemzellen, eine vollkommen selbstoperierende E-POOL- Produktions, Verkehrs-Transport- und Verteillogistik zu erreichen, die als Gesamtsystem und auch in System-Einzelkomponenten und Baugruppen übergreifend, auf der Erde, in der Nautik und im Weltraum zusätzlich Anwendung findet und somit die Vorteile der flexiblen Multiachsen-Robot Systeme, durch zusätzliche hohe Stückzahlen in diesem Anwendungsbereich, in der Standardisierung, wirtschaftlichen Herstellung, Funktionalität und Anwendungsbreite, noch zu erweitern.

Dies ist gemäß der Erfindung dadurch erreicht, daß elektronische und elektrische E-POOL Netzwerke gebildet werden, bestehend aus Multiblock-Individual Computereinheiten, Zentralcomputern, Bordcomputern, Satelliteneinheiten, Antenneneinheiten, offenen und berührungsgeschützten Unterboden- und Überboden Strom- und Kommunikationszuführungen mit internen Kontrollpunkt-Kennungsträgern, Positions- und Richtungscode-Bahnführungen die auf die Fahrbahnoberfläche und identisch dazu auf die Oberseite der berührungsgeschützten Strom- und Kommunikationszuführungen in metallisierter Dünnschichtlackierung und metallisierten Dünnschicht-Aufklebefolien, mit integrierten Induktivleiterstreifen und Positions-, Richtungscode-, und Kontrollpunkt-Kennungsträgern aufgetragen sind und die über Multiblock-Robot Normteil interne Strom- und Kommunikationsleitungen über Dachsolareinheiten, Segmentsolareinheiten, Solar- und Windkraftanlagen, sowie über batterieversorgende E-STOPS, weitgehend energieautonom sind und daß im gegenseitigen Datenaustausch zueinander, gesteuert und energierversorgt von den elektronischen und elektrischen E-POOL Netzwerken, ein selbstoperierender E-POOL Verbund gebildet wird, der Multiblock-Transportroboter, Straßenoperationsroboter, Serviceroboter, Multiblock-Robot Servicefahrzeuge, Verkehrs-, und Transportbaugruppen mit Individual PKW's und Kleintransportern, Schwerlaststraßentransporter und Busse und Schiene-Straße Transporter, Verteilbaugruppen mit verfahrbaren Produktions- und Zusammenstellungsbaugruppen, Zustell- und Direktentnahme-Baugruppen, verfahrbare und stationäre Kühl- und Verteilboxen, sowie stationäre Produktions- und Zusammenstellungsbaugruppen umfaßt, daß von E-POOL Benutzern über die E-POOL Computereinheiten und hierzu kompatiblen Computern, mit E-POOL Bestellsoftware, Bestellungen und Aufträge, Leistungen und Lieferungen an die E-POOL Zentralcomputer übermittelt wird, die durch den selbstoperierenden E-POOL Verbund produziert, zusammengestellt, verteilt, transportiert und zielpunktgenau bis zum Firmengelände, dem Institutionsgebäude, der Hausetage, der Privat-Wohnung geliefert und an jedem anderen, bestellten Zielpunkt bereitgestellt werden.

Hiermit ist gegenüber dem Stand der Technik erreicht, daß die Vielfalt, Funktion und wirtschaftliche Herstellung der Baugruppen von Multiblock-Robots und anderer, selbstoperierender Multiblock-Robot-Systeme durch die Erschließung dieses weiteren großen Anwendungsbereiches, noch gesteigert wird. Außerdem werden im vorliegenden Systembereich durch die autonom, ohne steuernden Eingriff ablaufenden Prozeßketten, unter Einbezug des Individual- und Güterverkehrs, Verkehrsunfälle mit Personen- und Materialschäden vollkommen ausgeschaltet. Zusätzlich wird die Attraktivität dadurch gesteigert, daß das Gesamtsystem CO2 frei arbeitet und die Gesamt-Energiebilanz weitaus günstiger und der Energieverbrauch erheblich niedriger liegt, als die Verkehrs- und Transportlogistik und die Produktions- und Verteilkomponente herkömmlicher Systeme. Die individuellen Beschaffungs- und Einkaufsfahrten des Einzelnen entfallen. Die Waren werden durch raumoptimale, Hochgeschwindigkeits Roboter-Systemzellen geliefert und mit gleichgelagerten Bestellungen zielgerichtet koordiniert und zusammengefaßt. Dadurch wird die Gesamtverkehrsbewegung in einer Region, einer Volkswirtschaft, erheblich reduziert. Die Anzahl der Verkehrs- und Transportmittel wird gleichermaßen reduziert. Vorhandene Schienen- und Gleisanlagen werden gleichgewichtig zur Straße genutzt. Die Umladungen von Schienenfahrzeugen auf Straßenfahrzeuge und umgekehrt entfallen durch Nutzung ein und derselben Fahrzeuge auf der Schiene und auf der Straße. Gefahren-Transportgüter werden ohne Umweltrisiko zu den Zielpunkten transportiert. Die Asphaltierung, der Straßenausbau kann zurückgenommen werden, der Verkehrs-Lärmpegel sinkt, die Luft, das Klima, die Umwelt wird entscheidend verbessert. Die integrierte Produktions- und Zusammenstellungssystematik der raumoptimalen, standardisierten Hochgeschwindigkeits-Produktions- und Zusammenstellungsbaugruppen ist zusätzlich sehr wirtschaftlich, bei gleichzeitiger Reduzierung des Bedarfs an Operatiansfläche in einer Region. Die erforderlichen Realisierungsmaßnahmen sind ohne Forschungsaufwand, schnell und kostengünstig durchzuführen. Die einzelnen systemfremden Kombinationsmitglieder gemäß der Erfindung, sind bereits erprobt und werden lediglich in neuer Kombination und neuen Varianten für das Multiblock-Gesamtsystem in Multiblock-Robot Normteilen, Flanschaufsteckgehäusen und standardisierten Multiblock-Roboterzellen adaptiert und zu neuen Multiblock-Robot Systemvarianten genutzt. Die schienen-, straßen- und städtebauliche Infrastruktur wird nicht verändert. Das Multiblock-Robot System setzt auf vorhandene Strukturen auf und erfordert lediglich minimale Änderungen und Neuerungen. Der Aufbau des Multiblock-Robot Systems erfolgt punktuell regional unter der Bildung von Systemknoten, die nahtlos in der Erweiterung zu überregionalen Netzwerken verbunden werden. Einzelne Baugruppen und Systemkomponenten, wie auch das Gesamtsystem, sind für unterschiedliche andere Aufgaben auf der Erde zusätzlich einsetzbar, jedoch auch in der Nautik für selbstoperierende, dicht abgeschlossene Multiblock-Robot Unterwasserstationen direkt einsetzbar und für den wirtschaftlichen Aufbau und Betrieb von Weltraumstationen notwendig. Das Gesamtsystem ist als autonome Multiblock-Robot Außenstation direkt auf anderen Planeten installierbar, mit dem besonderen Aspekt der durchgehenden Standardisierung, der Kompatibilität und Austauschbarkeit aller Multiblock-Normteile, Flanschaufsteckgehäuse und Systemzellen zueinander und zu allen anderen Multiblock-Robot Systemanwendungen. Ausgestaltungen der Erfindung sind in den Unteransprüchen genannt.

Die Erfindung wird im folgenden anhand von Ausführungsbeispielen, mit Bezug auf die Zeichnung näher erläutert. In dieser zeigt:
Fig. 1 die perspektivische Draufsicht auf eine Straßenkreuzung mit selbstoperierenden E-POOL Verkehrs- Transport- und Verteilbaugruppen mit Positions- und Richtungungscode-Bahnführungen, sowie E-POOL Netzwerk-Datenaustausch;

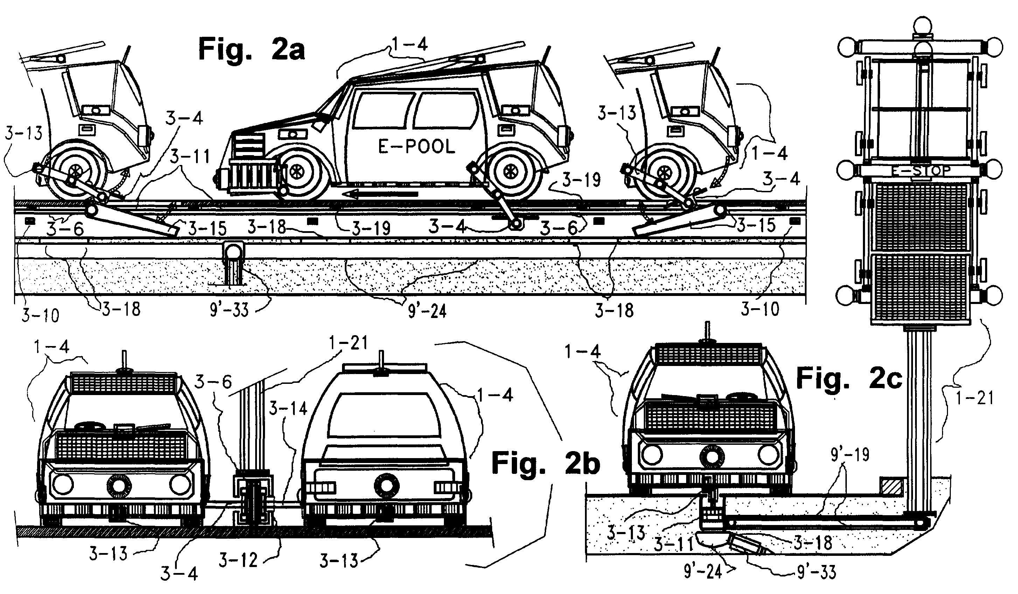

Fig. 2a,b,c, die Seitenansicht im Schnitt durch eine berührungsgeschützte Unterboden Strom- und Kommunikationszuführung mit Einfahrt-Ausfahrt Schwenkeinheiteinheiten beim Einschwenken-Ausschwenken des Strom- und Kommunikationsabnehmerwagens eines E-POOL Individual PKW's; die Vorder- und Rückansicht auf zwei E-POOL Kleintransporter und seiltich zur Fahrtrichtung angeordneter, berührungsgeschützter Unterboden Strom- und Kommunikationszuführung mit Energieversorgung durch Multiblock-Solar-Windkraftanlagen; die Vorderansicht eines E-POOL Kleintransporters mit Schnitt durch eine berührungsgeschützte Unterboden Strom- und Kommunikationszuführung und Energieversorgung durch seitlich zur Fahrtrichtung angeordneten Multiblock-Solar-Windkraftanlagen;
Fig. 3a,b, die perspektivische Ansicht eines E-POOL Fahrzeug-Chassis mit Eingriff des Strom- und Kommunikationsabnehmerwagens in eine berührungsgeschützte Unterboden Strom- und Kommunikationszuführung; das Detail der Positions- und Richtungungscode-Bahnführung;
Fig. 4a,b, die Draufsicht auf einen E-POOL Individual PKW und Bewegungsablauf bei seitlicher Fahrtumsetzung mit herausgezeichneter Innenraumschwenkeinheit; die Seitenansicht mit perspektivisch herausgezeichneter Innenraumschwenkeinheit;
Fig. 5, die Draufsicht auf einen E-POOL Individual PKW und Bewegungsablauf bei seitlicher Fahrtumsetzung zum Zweck des Einparkens;
Fig. 6a,b, die perspektivische Draufsicht auf zwei E-STOPS mit einem Individual-PKW und einem Kleintransporter, mit Positions- und Richtungscode Bahnführung; das herausgezeichnete Detail einer Positions- und Richtungscode-Bahnführung;
Fig. 7, die Draufsicht auf eine mehrspurige Fernstraße mit Mittelstreifen und CO2 freier E-POOL Energieversorgung und auf den beidseitigen Fahrspuren, Einrichtung von Positions- und Richtungscode Bahnführungen und berührungsgeschützten Unterboden- und Überboden Strom- und Kommunikationszuführungen;
Fig. 8a,b,c, die Vorderansicht im Bereich des Mittelstreifens, des Fernstraßenausschnitts gemäß der Fig. 7 mit zwei Schiene-Straße Transportern; die herausgezeichneten Details der Schiene-Straße Fahreinheiten;

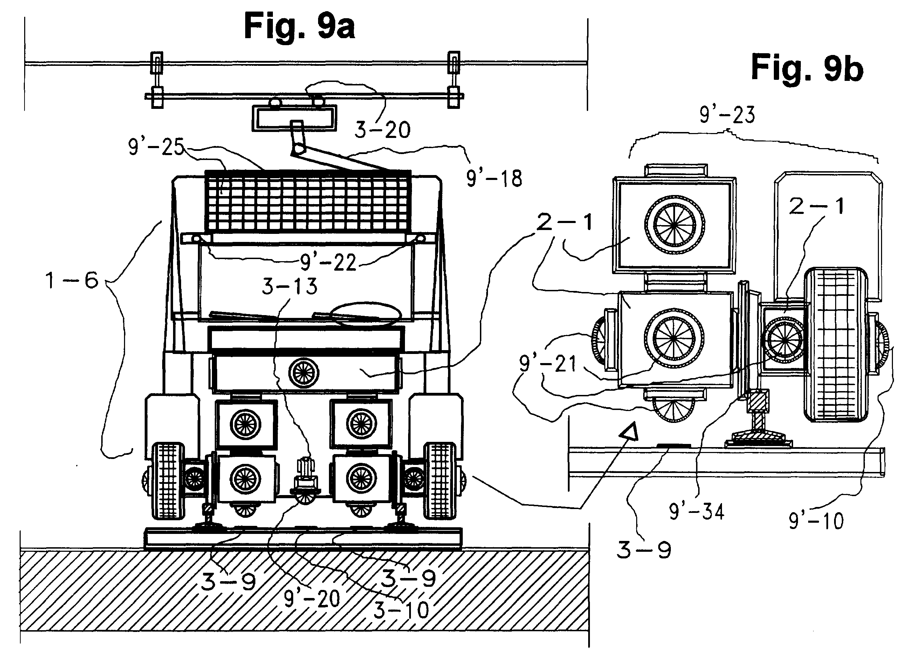

Fig. 9a,b, die Vorderansicht eines E-POOL Schiene-Straße Transporters gemäß der Fig. 8 auf einem Schienenkörper mit offener Überkopf Strom- und Kommunikationszuführung; das herausgezeichnete Detail der Schiene-Straße-Radeinheit auf dem Schienenkörper;
Fig. 10a,10b, die Seitenansicht eines E-POOL Schiene-Straße-Transporters und Datenaustausch mit den E-POOL Satelliten; das herausgezeichnete Schiene-Straßen-Auffahrtdetail;

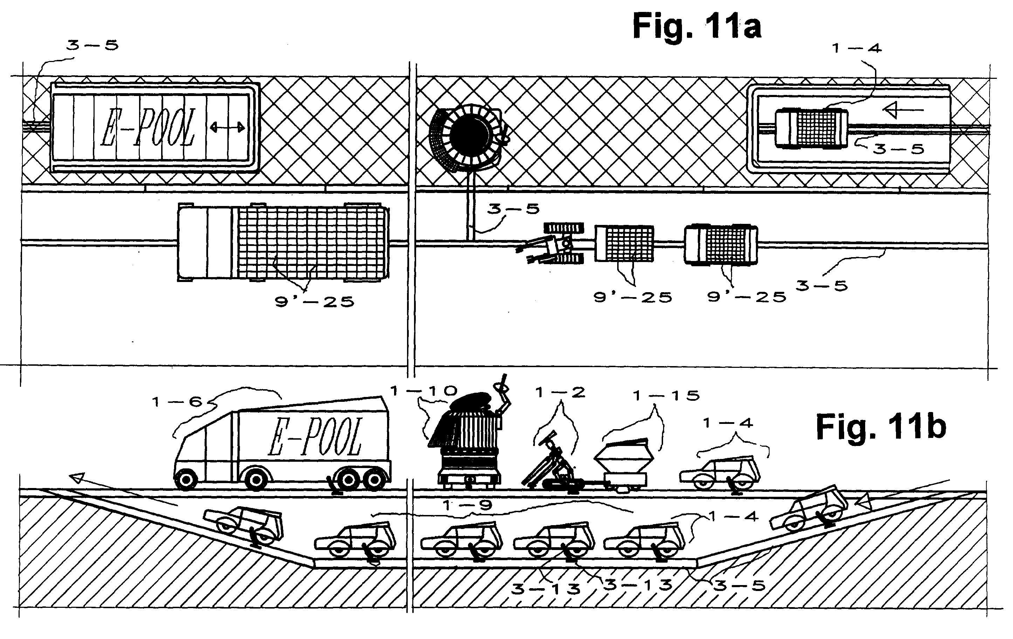

Fig. 11a,b, die Draufsicht und Schnittdarstellung eines bahngeführten E-POOL- Schiene-Straße Transporters, einer E-POOL Zustell-Verteilbaugruppe, eines Multiblock-Straßenoperationsrobots mit angekoppeltem Positions- und Richtungscodeverlege-Container und eines E-POOL Individual PKW's; die Bereitstellung von E-POOL Individual PKW's in der E-POOL-Bereitstetlungsunterführung am Fahrbahnseitenstreifen;
Fig. 12a,b, die Seitenansicht auf eine verfahrbare Produktions- und Zusammenstellungsbaugruppe mit ankoppelndem Multiblock-Robot Service Fahrzeug und Aufbereitung von stationären Kühl- und Verteilboxen, sowie den Datenaustausch mit den E-POOL Zentralcomputern und E-POOL Satelliten; die perspektivische Ansicht eines Multiblock-Transport Robots beim Transport einer stationären Kühl- und Verteilbox;
Fig. 13a,b,c die perspektivische Ansicht eines E-POOL-Multiblock Transport-Robots mit Boden- und Überkopfbahnführung, beim Transport einer stationären Kühl- und Verteilbox; den herausgezeichneten Roboterarm mit Hydraulik-Flanschaufsteckgehäusen; die zentrale Kanalführung der Multiblock-Robot Normteile im Längsschnitt; die zentrale Kanalführung in der zugehörigen Draufsicht im Schnitt;

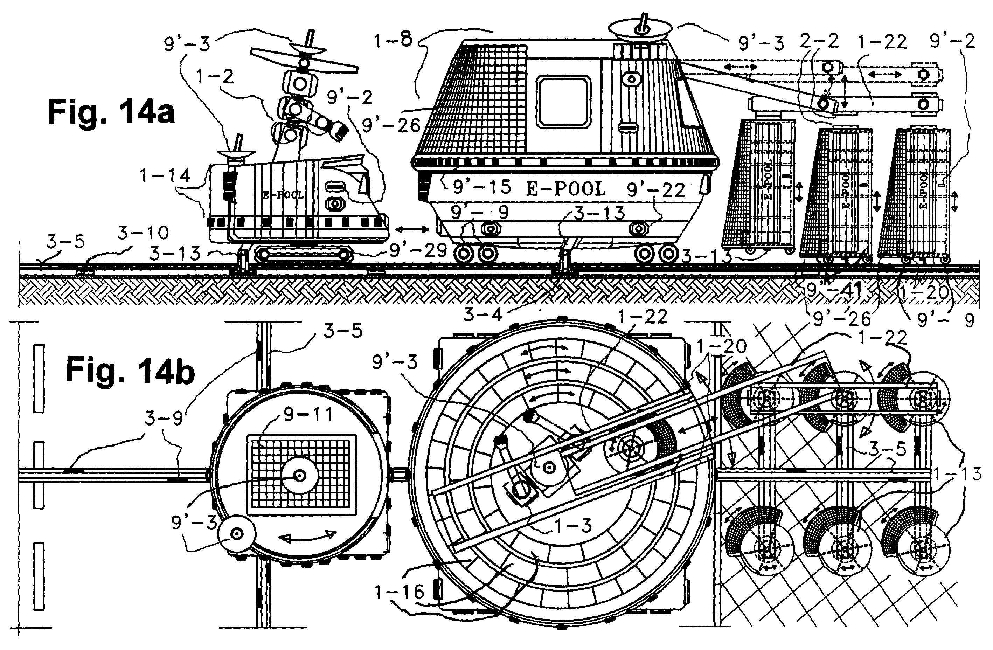

Fig. 14a,b, die Seitenansicht auf eine verfahrbare Produktions- und Zusammenstellungsbaugruppe, gemäß der Fig. 12, bei der Bereitstellung von bahnführungs-verfahrbaren Kühl- und Verteilboxen; die zugehörige Draufsicht;
Fig. 15 die Vorderansicht einer verfahrbaren Produktions- und Zusammenstellungsbaugruppe im Halbschnitt mit eingeschwenktem Strom- und Kommunikationsabnehmerwagen in eine berührungsgeschützte Unterboden Strom- und Kommunikationszuführung;
Fig. 16, die perspektivische Ansicht von zwei bahngeführten E-POOL Zustell-Verteilbaugruppen und einer Direktentnahme-Verteilgruppe, sowie von einem bahngeführten Multiblock Straßenoperations-Robot;
Fig. 17, die Draufsicht im Halbschnitt auf eine bahngeführte, verfahrbare Produktions- und Zusammenstellungsbaugruppe bei einer bodenfreien Teleskopträger-Warenentladung, sowie im Schnitt einen Hauseingang mit Aufzug und Etagen-Warentransport durch E-POOL Multiblock Service-Roboter;
Fig. 18, die perspektivische Ansicht einer stationären Multiblock Robot Produktions- und Zusammenstellungsbaugruppe für die Produktion, Zusammenstellung und Lieferung von Waren, mit Abfahrt eines E-POOL Schwerlastransporters, sowie einen E-POOL Multiblock-Straßenoperations Robot auf einer Kreis-Bahnführung um die Produktions- und Zusammenstellungsbaugruppe herum und den Datenaustausch mit E-POOL Satelliten;
Fig. 19, die perspektivische Ansicht einer doppelstöckigen E-POOL Produktions- und Zusammenstellungsbaugruppe für die Produktion, Zusammenstellung und Lieferung von Waren, mit Abfahrt eines E-POOL Schwerlasttransporters, die Zufahrt von Zustellbaugruppen und eines Multiblock-Transport-Robots, sowie den Datenaustausch mit den E-POOL Zentralcomputern über die E-POOL Satelliteneinheiten;
Fig. 20, die perspektivische Ansicht einer seriellen, E-POOL Produktions- und Zusammenstellungsbaugruppe, bestehend aus drei stationären Produktions- und Zusammenstellungsbaugruppen gemäß der Fig. 18, für die Produktion, Zusammenstellung und Lieferung von Waren, mit vorgelagerten, in Ladungsbereitschaft bahngeführten E-POOL Transportbaugruppen, bestehend aus zwei Schwerlasttransportern und einem Individual PKW und Zufahrt von Zustell-Verteilbaugruppen und eines Multiblock-Transport Robots.

Bewegungspfeile in den Fig. zeigen die Bewegungsrichtungen der Systemteile an, Signalpfeile die Richtung des Datenaustauschs und Ansichtspfeile den Ursprung und die Blickrichtung für herausgezeichnete Unteransichten, Schnitte und Systemdetails der jeweiligen Fig..

### Fig. 1, Fig. 2

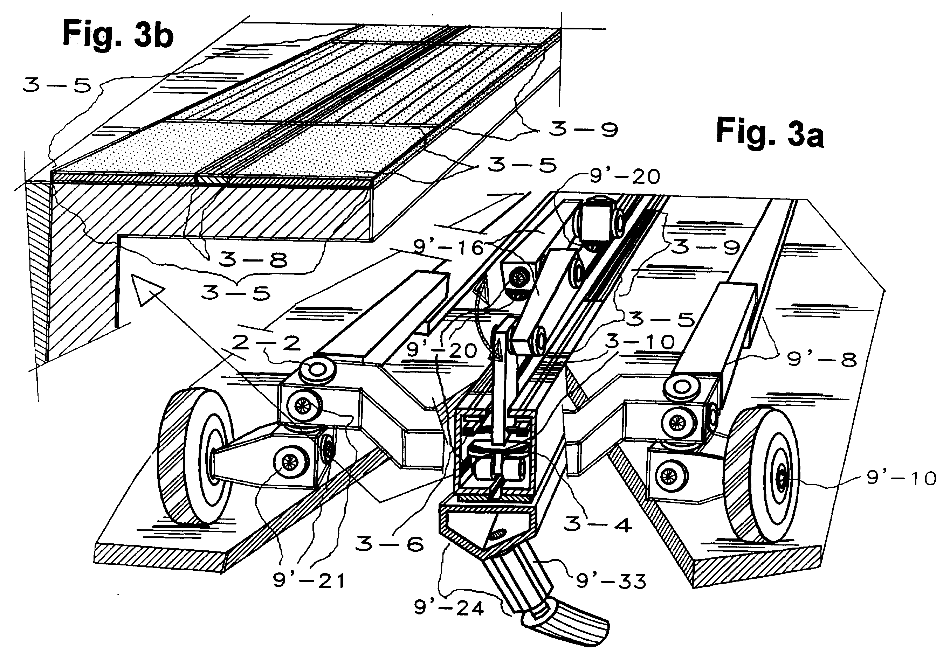

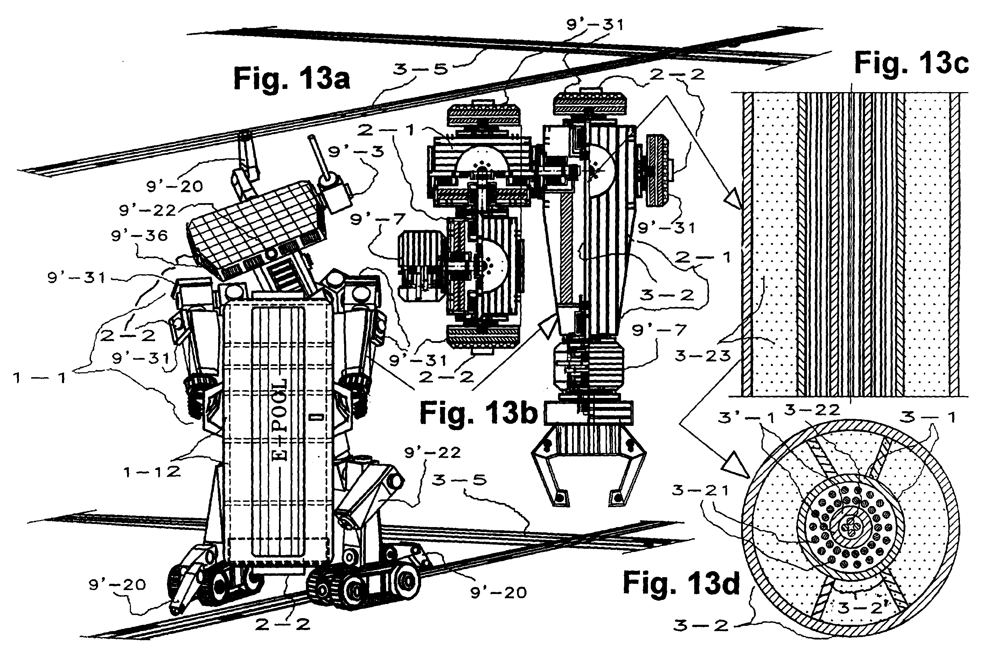

Multiblock-Robot Systeme sind selbstoperierend. Für die vorliegende Multiblock-Robot Systemerfindung bedeutet dies, daß nach Befehls-Bestelleingabe für zielgenaue Lieferungen, Bereitstellungen und Leistungen, ausgelöst von E-POOL Benutzern über E-POOL Individual Computereinheiten 3-16 und E-POOL Bestellsoftware, im Datenaustausch über das elektronische E-POOL-Netzwerk, E-POOL Abwicklungs-Prozeßketten kollisionsfrei und operationssicher durchlaufen werden, die keinerlei Bedienungskorrekturen oder Überwachungen erfordern und die Bestellungen zielgenau ausführen, sowie, die einzelnen dafür erforderlichen E-POOL Systembaugruppen nach Bestellausführung, wieder in die Ausgangs-Bereitstellungspositionen zurückführen. Dabei sind die E-POOL Systembaugruppen jedoch jederzeit durch korrigierende und neue Befehls-Bestelleingaben über die Benutzer-E-POOL Computer-Terminals 3-16 und vor Ort, an und in den Systembaugruppen, über Spracheingabecodes und E-POOL Benutzer-Scheckkarten, in der Bestell- und Auftragsausführung neu definierbar. Um die kollisionsfreien und operationssicheren Abwicklungs-Prozeßketten gewährleisten zu können, werden die Verkehrs-, Transport-, und Verteilbaugruppen auf Positions- und Richtungscode Bahnführungen 3-5 geführt. Die einzelnen E-POOL Multiblock-Roboter 1-1,1-2,1-3 des E-POOL Verbunds sind in der Struktur und im Aufbau gleich und unterscheiden sich, je nach Aufgabenstellung und Gesamtsystemanforderung, durch die unterschiedlichen Flanschaufsteckgehäuse 9' die, wie die Hydraulik-Flanschaufsteckgehäusen 9'-31, gemäß der Fig. 13, auf die Multiblock-Robot Normteile 2-1 aufgesteckt sind. Die dargestellten E-POOL Multiblock-Straßenoperations Roboter 1-2, E-POOL Individual PKW's 1-4 und E-POOL Zustell-Verteilbaugruppen 1-10, werden im Datenaustausch mit den E-POOL Satelliten 9'-32 auf den Positions- und Richtungscode Bahnführungen 3-5, zur zielgenauen Bestellausführung geführt. Berührungsgeschützte Unterboden- und Überboden Strom- und Kommunikationszuführungen 3-11,3-12 ermöglichen die Stromversorgung und leistungsstarke Fortbewegung der Verkehrs-, Transport-, und Verteilbaugruppen, unter Schonung der eigenen Batterie-Energiereserven. Sie werden insbesondere dort genutzt und je nach Notwendigkeit in der Länge dort eingebaut wo der Energiebedarf, wie bei Fahrbahnsteigungen, sehr hoch ist. Die Verkehrs-,Transport- und Verteilbaugruppen, in der Darstellung die Individual-PKW's und Kleintransporter 1-4, werden zu diesem Zweck mit Unterboden- und Überboden Strom- und Kommunikationszuführungsschwenkarmen 3-13,3-14 ausgeführt, die mit zugehörigen Strom- und Kommunikationsabnehmerwagen 3-4 für die Stromverbindung von den Unterboden- und Überboden Strom- und Kommunikationszuführungen 3-11,3-12 zu den Fahrantriebseinheiten 9'-9,9'-23,9'-29 der Verkehrs-, Transport-, und Verteilbaugruppen sorgen. Die Strom- und Kommunikationsleiter der Unterboden- und Überboden Strom- und Kommunikationszuführungen 3-11,3-12 werden an Isolatoren 3-19 befestigt und sicherheitsgeführt. Auf den Fahrtstrecken werden an den Endpunkten und entlang der Unterboden- und Überboden Strom- und Kommunikationszuführungen 3-11,3-12, glatt mit deren Oberfläche, Ein-Ausfahrt Schwenkeinheiten 3-15 eingesetzt, die ohne Fahrtunterbrechung, das Ein- und Ausschwenken der Unterboden- und Überboden Strom- und Kommunikationszuführungsschwenkarme 3-13,3-14 und der Strom- und Kommunikationsabnehmerwagen 3-4, in und von den Unterboden- und Überboden Strom- und Kommunikationszuführungen 3-11,3-12 erlauben. Innerhalb der Unterboden und Überboden Strom- und Kommunikationszuführungen 3-11,3-12 sind Kontrollpunkt-Kennungsträger 3-10 aufgesetzt, die für Positions-Soll-Ist Vergleiche der E-POOL Bordcomputer 9'-1, von Schwenkarm-Sensoren 9'-20, entsprechend Fig. 3a, die seitlich an den Laufrollen der Strom- und Kommunikationsabnehmerwagen 3-4 aufgesteckt sind, berührungslos abgetastet werden. Die Überboden Strom- und Kommunikationszuführungen 3-12 sind im Aufbau gleich den Unterboden Strom- und Kommunikationszuführungen 3-11 mit Integration der Ein-Ausfahrt Schwenkeinheiten 3-15, sie sind jedoch in Bezug auf die Unterboden Strom- und Kommunikationszuführungen 3-11, um 90° und 180° versetzt angeordnet, mit entsprechender, um 90° versetzter, horizontaler Anordnung der Überboden Strom- und Kommunikationszuführungsschwenkarme 3-14 an den Verkehrs-, Transport-, und Verteilbaugruppen und um 90° und 180° versetzt eingreifenden Strom- und Kommunikationsabnehmerwagen 3-4, in die Überboden Strom- und Kommunikationszuführungen 3-14. Die berührungsgeschützten Unterboden Strom- und Kommuni-kationszuführungen 3-11 weisen in Abständen zueinander, Wasserablaufschlitze auf, für die Regenwasserabführung in die unter den Unterboden Strom- und Kommunikationszuführungen 3-11 geführten Wasserablaufkanäle 9'-24, die in größeren Abständen zueinander über Multiblock-Abwasserpumpen 9'-33, in die öffentliche Kanalisation ableiten. Für die weitgehend E-POOL autonome Stromversorgung der Unterboden- und Überboden Strom- und Kommunikationszu-führungen 3-11, 3-12, werden E-STOP Multiblock-Solar-Windkraftanlagen 1-21 genutzt, die mittig und seitlich zu den Fahrtrichtungen, am Straßenrand aufgestellt sind.

### Fig. 3

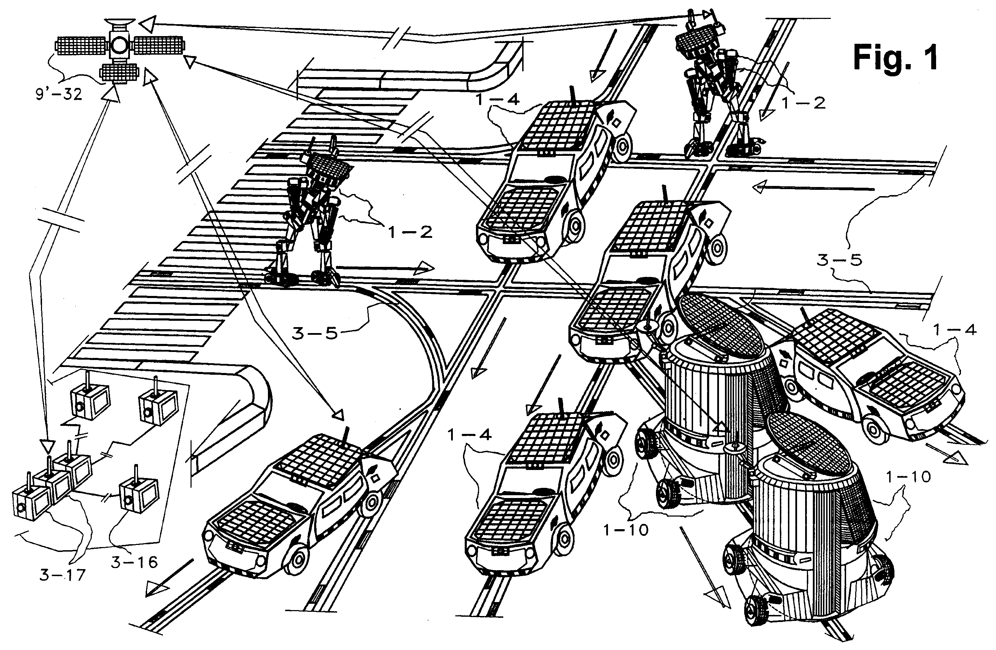

Auf die berührungsgeschützten Unterboden Strom- und Kommunikationszuführungen 3-11 sind an der Oberfläche, links und rechts zum Eingriffsschlitz der Unterboden Strom- und Kommunikationszuführungsschwenkarme 3-14, Positions- und Richtungscode-Bahnführungen 3-5 in metallisierter Dünnschichtlackierung aufgetragen, die genau identisch mit den Positions- und Richtungscode-Bahnführungen 3-5 sind, die auf die Straßenoberfläche, gemäß der Fig. 1, aufgetragen sind. Insofern können die Unterboden Strom- und Kommunikationszuführungen 3-11 an jeder beliebigen Stelle und in beliebigen Längen, in Kurven und geradverlaufenden Strecken einer Positions- und Richtungs-code-Bahnführung 3-5 markierten Fahrbahn eingesetzt werden, ohne daß sich am Einschwenkungs-Ausschwenkungsendpunkt der Ein-Ausfahrt Schwenkeinheiten 3-15, Orientierungsprobleme für die Schwenkarm-Sensoren 9'-20 ergeben, die den Richtungsverlauf der Positions- und Richtungscode-Bahnführungen 3-5 berührungslos abtasten und Steuersignale an die Bordcomputer 9'-1 für die entsprechende Lenkungseinstellung der Multiblock-Robot Fahrantriebseinheiten 9'-9,9'-23,9'-29, weiterleiten. Die Richtungscode-Bahnführungen 3-5 erhalten links und rechts zu den freibleibenden Streifeneinheiten in der Breite des Schlitzes für den Eingriff des Unterboden Strom- und Kommunikationszuführungsschwenkarmes 3-14, jeweils mittig, längs kontinuierlich durchlaufende, metallisierte Zusatzdünnschichtlackierungen, die fahrtrichtungsmarkierenden Induktivleiter Streifen 3-8, die von den Schwenkarm-Sensoren 9'-20 berührungslos abgetastet werden. Links und rechts zu den Induktivleiter Streifen 3-8 sind in Abständen Induktive Positionskennungsträger 3-9 auf die Richtungscode-Bahnführungen 3-5 zusätzlich auflackiert und auch in metallisierten Dünnschicht-Aufklebefolien aufgetragen. Die Positionskennungsträger 3-9 markieren die Positionspunkte entlang der Positions- und Richtungscode-Bahnführung 3-5 und werden ebenfalls von den Schwenkarm-Sensoren 9'-20 berührungslos abgetastet und die Positionssignale werden für kontinuierliche Positions Soll-Ist-Vergleiche an die Bordcomputer 9'-1 weitergeleitet. Zusätzlich zu den Positionskennungsträgern 3-9 werden Kontrollpunkt-Kennungsträger 3-10 auflackiert und in metallisierten Dünnschicht-Aufklebefolien aufgetragen, die bei Erreichen und Erfassen durch die Schwenkarm-Sensoren 9'-20, Steuerungsinformationen an die Bordcomputer 9'-1 und die E-POOL Zentralcomputer 3-17 weiterleiten, so insbesondere für die Positions-Markierung von Ein-Ausfahrt Schwenkeinheiten 3-15 und das selbstätige Ein-Ausschwenken dieser Einheiten, falls die Unterboden Strom- und Kommunikationszuführungsschwenkarme 3-14 in die Unterboden Strom- und Kommunikationszuführungen 3-11 ein- oder ausgeschwenkt werden sollen. Die metallisierten Dünnschichtlackierungen und metallisierten Dünnschicht-Aufklebefolien der Positions- und Richtungscode-Bahnführungen 3-5 mit den Induktivleiter Streifen 3-8, den Positionskennungsträgern 3-9 und den Kontrollpunkt-Kennungsträger 3-10, besitzen induktive Eigenschaften, so daß sie von den Schwenkarm-Sensoren 9'-20 auch bei Verschmutzungen ohne Signalverluste, berührungslos abgetastet werden können. Je nach Straßenzustand und für temporäre Bahnleit-Markierungen, werden nur die metallisierten Dünnschicht-Aufklebefolien, mit den gleichen induktiven Eigenschaften wie die der metallisierten Dünnschichtlackierungen, auf die Fahrbahn aufgeklebt. Der unter der berührungsgeschützten Unterboden Strom- und Kommunikationszuführungen 3-11 angeordnete Wasserablaufkanal 9'-24 läuft nach unten konisch zu und zeigt den Wasserablaufstutzen mit der Multiblock-Abwasserpumpe 9'-33 und die Ableitung in die öffentliche Kanalisation. Die Unterboden Strom- und Kommunikationszuführungsschwenkarme 3-14 sind genau mittig hinten auf Drehflansch-Steckverbindungen 2-2 der Chassisrahmen 9'-8 aufgesteckt, die über Multiblock-Fahrantriebseinheiten 9'-9 und diesen zugehörigen Drehflansch-Steckverbindungen 2-2, mit den Fahrantriebseinheiten 9'-23, den Radsensoren 9'-10 und den Chassis-Sensoren 9'-21 ausgerüstet sind, so daß die Positions- und Richtungscode-Bahnführungen 3-5 immer mittig zu den Chassis-Rahmen 9'-8 positioniert sind.

### Fig. 4, Fig. 5,

Die E-POOL Verkehrs- und Transportbaugruppen erhalten statt der üblichen Fahrzeugtüren, Innenraumschwenkeinheiten 9'-28, die auf ein zentrales Multiblock-Robot Normteil 2-1 aufgesteckt sind, das für den Drehantrieb sorgt und über die Chassis-Spurringbahn 9'-38 auf Spurringbahn-Rollenlagern 9'-39 um 360° nach links oder rechts frei schwenkbar, außen aufdem Chassis 9'-8 gelagert sind. Die Innenraumschwenkeinheiten 9'-28 erhalten einen Karosserieüberbau 9'-37 mit Fahrzeug-Seitenfenstereinsatz. Der Karosserieüberbau 9'-37 ist ansonsten in Anpassung an die jeweilige Fahrzeugkarosserie der E-POOL Verkehrs- und Transportbaugruppen ausgelegt und schließt am Übergang zur Karosserie-Vorder- und Rückseite über vertikale Gummidichtungs-Längsrolleneinsätze 9'-28' die Innenraumschwenkeinheiten 9'-28 in eingeschwenktem Fahrtsituationszustand, nach außen hin dicht ab. Die Innenwände der Innenraumschwenkeinheiten 9'-28 sind links und rechts neben den Sitzen mit Handbedienungs-Kontrolleinheiten 9'-2' ausgerüstet, die Fahrzeug-Lenkkontrolleinheiten umfassen, für die jederzeitige Fahrzeug-Lenkungsübernahme durch die Mitfahrer und Abschaltungsmöglichkeiten der selbstopenerenden Funktionen. Zusätzlich sind hier Eingabetastaturen und Multiblock-Robot Sprach-Steuerungseinheiten für den Bedienungsdialog mit dem Bordcomputer 9'-1 eingebaut. Außerdem sind hier E-POOL Scheckkartenleseeinheiten 9'-2 vorgesehen, die als zweite erforderliche Nutzungsberechtigungskontrollprüfung, neben der ersten Nutzungsberechtigungskontrollprüfung durch die E-POOL Scheckkartenleseeinheiten 9'-2, die an den Außenkontouren eingesetzt sind und dort die Einschwenkung der Innenraumschwenkeinheiten 9'-28 für den ungehinderten Einstieg auslösen, bei Fahrzeugübernahme durch E-POOL Benutzer die Berechtigungskontrolle erfassen und das jeweilige Fahrzeug für die Benutzung freischalten. Die Innenraumschwenkeinheiten 9'-28 erhalten für den Transport von Gegenständen, Lasten Robotern und Personen, die entsprechenden Inneneinrichtungen wie Paletten, Lastgabeln, Gurtförderer, Lastaufnahmecontainer, zwei oder mehr Personensitze. Im vorliegenden Fall der Individual PKW's zwei Personensitze mit Freiraum nach hinten für die Aufnahme von Beladungsgegenständen und Lasten. Für das einwandfreie und zielgenaue Erreichen der Aufnahme-Absetzungsposition bei selbstoperierender Lastaufnahme von Transport- und Verteilgruppen seitlich zur Fahrtrichtung und auch für das Einparken-Ausparken, werden die Positions- und Richtungscode Bahnführungen 3-5 mit Positions- und Richtungscode Kennungsträgern 3-9 und Kontrollpunkt Kennungsträgern 3-10, auch in 90° zur Fahrtrichtung auf die Fahrbahn oder den Bürgersteig aufgetragen. Die Aufnahme oder das Absetzen von Gegenständen, Lasten, Robotern und Personen, seitlich zur normalen Fahrtrichtung erfolgt, indem das Fahrzeug abgebremst und die vier Fahrantriebseinheiten 9'-9 komplett mit der Radeinheit aus dem Stand heraus um 90° eingeschwenkt werden und der Individual PKW 1-4 direkt auf den Aufnahmezielpunkt zufahrt, ohne daß ein mehrfach korrigierendes Vor- und Rückwärtseinfahren erforderlich ist. Die Innenraumschwenkeinheit 9'-28 wird um 90° eingeschwenkt, so daß die Seitenöffnungen frei liegen. Die Sitz- oder Lasteinheit wird über die Ein-Ausschubeinheit 9'-37 soweit nach vorn geschoben, daß ein ungehindertes Ein- Aussteigen und Übernehmen von Gegenständen und Lasten möglich ist. Beim Wiedereinstieg wird die E-POOL Benutzerscheckkarte in den Außenseiten-Scheckkartenleser 9-2 eingesteckt und die Innenraumschwenkeinheit 9'-28 wird für den Personeneinstieg um 90° eingeschwenkt.

### Fig. 6,

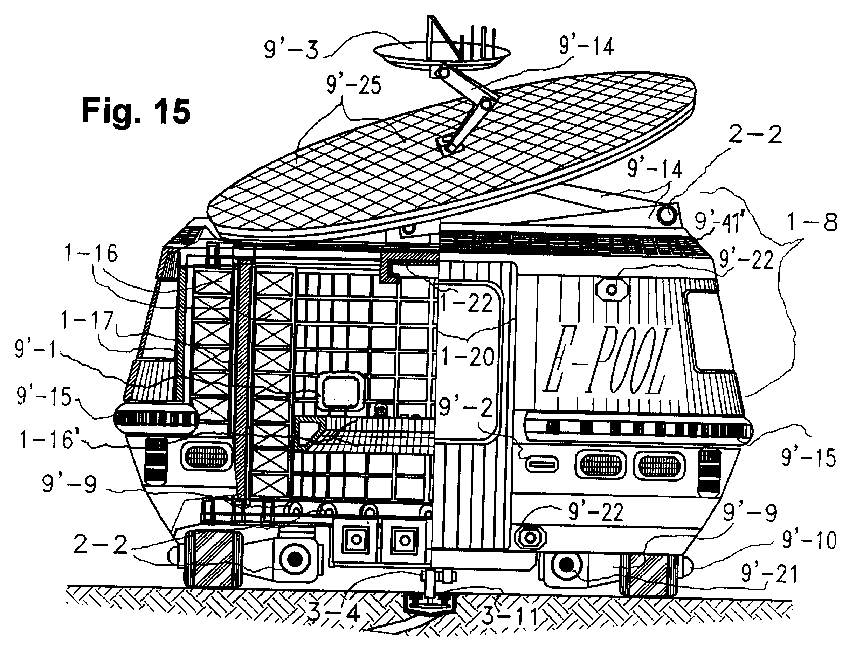

Die Zu- und Abfahrt, sowie die Fahrzeugpositionierung an E-STOPS für den Batteriewechsel und die Batterieaufladung wird ebenfalls über Positions- und Richtungscode Bahnführungen 3-5 mit den Induktivleiter-Streifen 3-8, den Positions- und Richtungscode Kennungsträgern 3-9 und Kontrollpunkt Kennungsträgern 3-10, sicher, ohne Rangierungsaufwand durchgeführt. Die Transport- und Verteilbaugruppen, hier ein Individual-PKW 1-4 und ein Kleintransporter 1-4, werden mit Sensoraußenringen 9'-15 ausgerüstet, die rundum Sonar- und Infrarotsensoren zur Ortung von Gegenständen und Personen enthalten. Zusätzlich werden Bilderkennungseinheiten 9'-22 an den Seitenwänden, vorne und hinten vorgesehen, so daß über die Sonar-, Infrarotsignal- und Bildauswertung durch die Bordcomputer 9'-1, kontinuierlich das Fahrzeugumfeld auf Bewegungshindernisse und auf nichtbewegliche Fahrthindernisse analysiert wird und gegebenenfalls unmittelbar Abbrems-Steuerungsbefehle an die Fahrantriebseinheiten 9'-9 erfolgen. Gleichzeitig wird über die Chassis-Sensoreinheiten 9'-21 die Entfernung zu Gegenständen und beweglichen Hindernissen, wie vorausfahrenden Fahrzeugen gemessen und über die Bordcomputer 9'-1, die Geschwindigkeit der Fahrantriebe entsprechend angepaßt. Die Chassis-Spurringbahnen 9'-38 liegen genau in der Mittelachse der Fahrzeuge, auf den Fahrzeug-Chassis 9'-8 auf. Die E-POOL Transportbaugruppen sind mit schwenkbaren Dachsolareinheiten 9'-25 ausgeführt, die in Standposition über Multiblock-Robot Schwenkarme 9'-14, gemäß der Fig. 15, kontinuierlich so eingeschwenkt werden, daß die Sonneneinstrahlung immer energienutzungsoptimal, senkrecht zur Oberfläche der schwenkbaren Dachsolareinheiten 9'-25 auftrifft. Bei Anfahrt der Fahrzeuge, werden die schwenkbaren Dachsolareinheiten 9'-25 wieder in die Ausgangsposition, flach über dem Fahrzeugdach zurückgeschwenkt.

### Fig. 7 bis Fig. 10

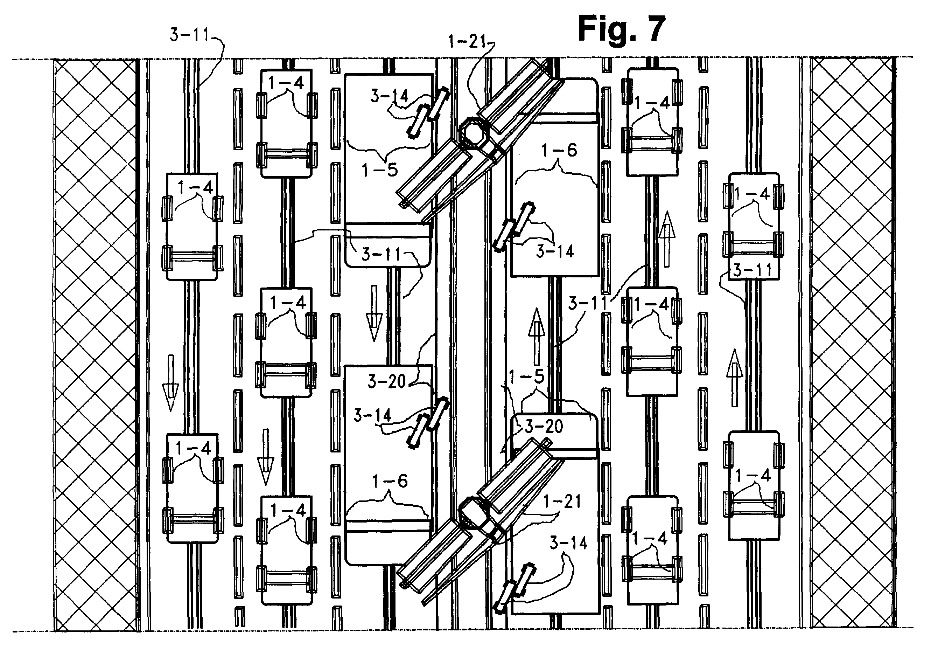

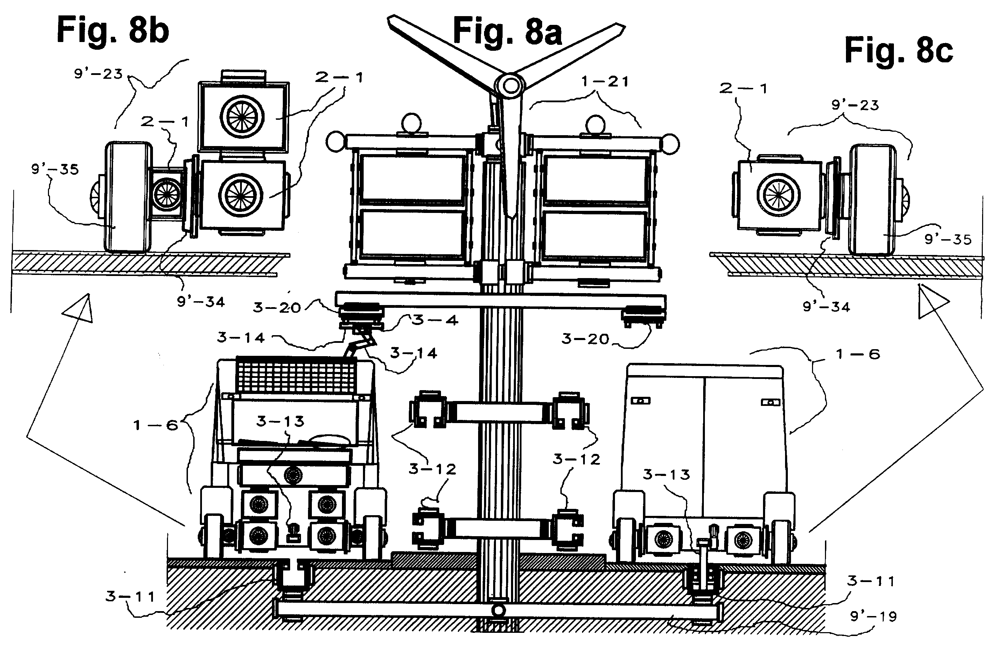

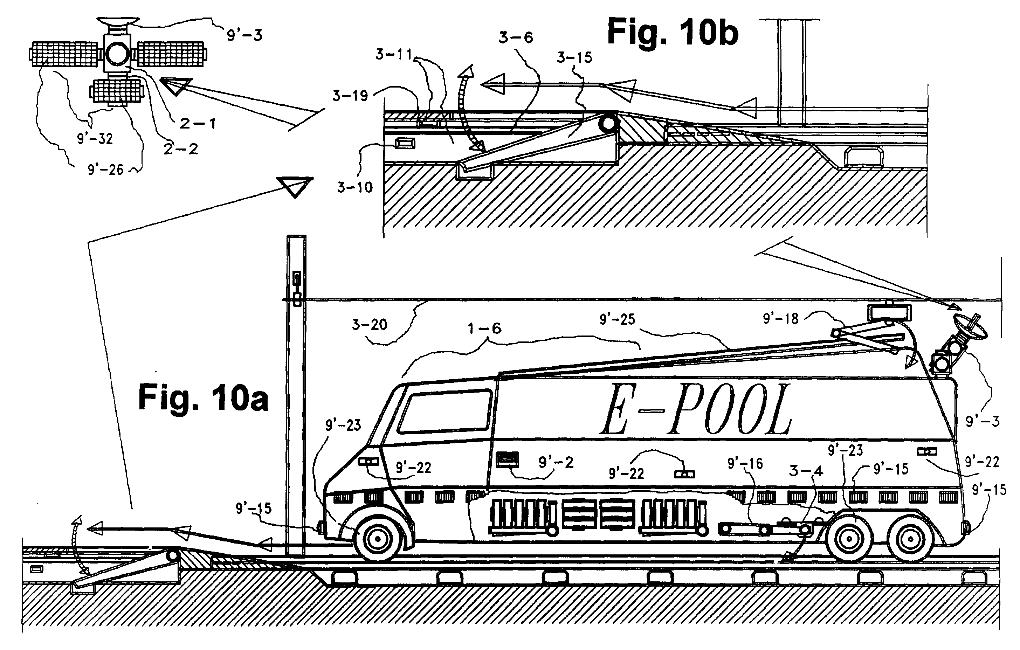

Bei mehrspurigen Fernstraßen werden im Mittelstreifen Multiblock-Solar- und Windkraftanlagen 1-21 vorgesehen, an denen entlang der Fahrbahnen, offene Überkopf Strom- und Kommunikationszuführungen 1-21 und berührungsgeschützte Überboden Strom- und Kommunikationszuführungen 3-12 befestigt sind, zwecks Stromversorgung von Schwerlasttransportern und Bussen 1-5 und Schiene-Straße Transportern und Bussen 1-6, über die Oberboden Strom- und Kommunikationszuführungsschwenkarme 3-14. Die einzelnen E-POOL Transport- und Verteilbaugruppen, wie die Individual-PKWs und Kleintransporter 1-4, die Schwerlasttransporter und Busse 1-5 und die Schiene-Straße Transporter 1-6, können in jede Fahrbahnspur beliebig einfahren und ausfahren und in jeder Fahrbahnspur und Richtung die Positions- und Richtungscode Bahnführungen 3-5 und die Strom- und Kommunikationszuführungen 3-11 nutzen. Die dargestellte Fahrstrecke. gemäß der Fig. 7, ist in jeder Fahrzeugbahn mit berührungsgeschützten Unterboden Strom- und Kommunikationszuführungen 3-11 ausgerüstet. Die dargestellten Schiene-Straße Transporter 1-6, gemäß der Fig. 8, zeigen die Option des Zugriffs zu den Strom- und Kommunikationszuführungen 3-11,3-12,3-20 auf und werden in den entgegengesetzten Fahrtrichtungen einmal über eine offene, Überkopf Strom- und Kommunikationszuführung 3-20 und den Überboden Strom- und Kommunikationszuführungsschwenkarm 3-14 mit Strom versorgt und in der Gegenfahrtrichtung über eine berührungsgeschützte Unterboden Strom- und Kommunikationszuführung 3-11 und den Unterboden Strom- und Kommunikationszuführungsschwenkarm 3-13. Die seitlich zur Multiblock Sonnen-Windkraftanlage 1-21 angeordneten, berührungsgeschützten Überboden Strom- und Kommunikationszuführungen 3-12, sind ebenfalls ohne Einschränkung für die direkte Energieversorgung nutzbar. Die Überboden- und Unterboden Strom- und Kommunikationszuführungen 3-11 und 3-12 sind durch die Flanschaufsteckgehäuse 9'-19, direkt mit den Strom- und Informationskanälen der mittig zu den Fahrbahnen installierten Multiblock Solar-Windkraftanlagen 1-21 verbunden. Die Schiene-Straße Transporter 1-6 sind mit Schiene-Straße Fahrantriebseinheiten 9'-23 ausgerüstet, in denen je nach Schienenführung und Antriebsanordnung, das Schienenrad 9'-34 in der Achsrichtung direkt neben dem Straßenrad 9'-35 angeordnet wird oder aber durch Zwischenschaltung eines Multiblock-Normteils 2-1. Das Schienenrad 9'-34 und das Straßenrad 9'-35 kann auch gesondert, in Fahrrichtung hintereinander angeordnet werden und je nach Nutzung Schiene oder Straße, jeweils getrennt voneinander, in gleicher weise wie die Strom- und den Überboden Strom- und Kommunikationszuführungsschwenkarm 3-14 mit Strom versorgt und in der Gegenfahrtrichtung über eine berührungsgeschützte Unterboden Strom- und Kommunikationszuführung 3-11 und den Unterboden Strom- und Kommunikationszuführungsschwenkarm 3-13. Die seitlich zur Multiblock Sonnen-Windkraftanlage 1-21 angeordneten, berührungsgeschützten Überboden Strom- und Kommunikationszuführungen 3-12, sind ebenfalls ohne Einschränkung für die direkte Energieversorgung nutzbar. Die Überboden- und Unterboden Strom- und Kommunikationszuführungen 3-11 und 3-12 sind durch die Flanschaufsteckgehäuse 9'-19, direkt mit den Strom- und Informationskanälen der mittig zu den Fahrbahnen installierten Multiblock Solar-Windkraftanlagen 1-21 verbunden. Die Schiene-Straße Transporter 1-6 sind mit Schiene-Straße Radeinheiten 9'-23 ausgerüstet, in denen je nach Schienenführung und Antriebsanordnung, das Schienenrad 9'-34 in der Achsrichtung direkt neben dem Straßenrad 9'-35 angeordnet wird oder aber durch Zwischenschaltung eines Multiblock-Normteils 2-1. In Abhängigkeit von der Beschaffenheit der Schienenkörper und Schienenverlegung, wird das Schienenrad 9'-34 und das Straßenrad 9'-35 auch gesondert, in Fahrtrichtung hintereinander angeordnet und je nach Schiene- oder Straße-Nutzung, jeweils getrennt voneinander, in gleicher Weise wie die Strom- und Kommunikationszuführungsscchwenkarme 3-14, über Multiblock-Normteile 2-1 hoch- und runtergeschwenkt. Dabei werden bei Kontakt der Schienenräder 9'-34 mit den Schienen, die Straßenräder 9'-35 hochgeschwenkt und bei Straßenauffahrt werden die Straßenräder 9'-35 runtergeschwenkt und bei Kontakt mit der Fahrbahnoberfläche und Fahrtastübemahme, werden die Schienenräder 9'-34 hochgeschwenkt. Die Schienenfahrt-Situation, gemäß der Fig. 10 zeigt, daß hier die Positions- und Richtungscode Kennungsträger 3-9 und die Kontrollpunkt Kennungsträger 3-10, auf die Schwellen des Schienenköpers aufgesetzt sind und von den Sensoren 9'-20,9'-21 der Unterboden- und Überboden Strom- und Kommunikationszuführungsschwenkarme 3-13,3-14 und der Multiblock-Normteile 2-1, berührungslos abgetastet werden. Die Strom- und Kommunikationszuführung erfolgt an der offenen Überkopf-Strom- und Kommunikationszuführung 3-20, mittels des Dach-Strom- und Kommunikationsabnehmerschwenkarms 9'-18. Am Übergang von der Schiene zur Straße und gleichermaßen von der Straße zur Schiene, beginnt bzw. endet der Verlauf der berührungsgeschützten Unterboden Strom- und Kommunikationszuführung 3-11 mit einer Einfahrt- Ausfahrteinheit 3-15. Hier setzen beim Verlassen des Schienenstrangs die Straßenrad-Einheiten 9'-35 mit den Straßenrädem 9'-35 auf die Auffahrtneigung zur Straßenfahrbahn auf und die Schienenrad-Einheiten 9'-34 verlieren mit den Schienenrädern 9'-34 den Eingriff mit der Schiene. Gleichzeitig wird der Dach-Strom- und Kommunikationsabnehmerschwenkarm 9'-18 eingeschwenkt, das Fahrzeug von der offenen Überkopf-Strom- und Kommunikationszuführung 3-20 getrennt und über Einschwenken des Unterboden Strom- und Kommunikationsabnehmerschwenkarms 9-16, der Strom- und Kommunikationsabnehmerwagen 3-4 in Richtung der Einfahrt-Ausfahrt Schwenkeinheiteinheiten 3-15, dort in die Unterboden Strom- und Kommunikationszuführung 3-11 überführt. Danach schwenkt die Einfahrt-Ausfahrt Schwenkeinheiteinheit 3-15 in Schließposition und schließt zur Fahrbahnoberfläche glatt ab. Auch auf der Schiene sind die Schiene-Straßen Transporter und Busse 1-6 über die E-POOL Satelliteneinheit 9'-32 und die Flanschaufsteckgehäuse mit Antenneneinheiten 9'-34, jederzeit im ständigen Datenaustausch mit dem E-POOL Netzwerk. In der angestrebten Kompatibilität und Austauschfähigkeit aller Baugruppen des E-POOL Verbunds zueinander sind die einzelnen Multiblock-Normteil 2-1, die Drehflansch Steckverbindungen 2-2, die Flanschaufsteckgehäuse 9' in der Ausführung identisch, so daß auch bei unterschiedlichsten Anwendungen, wie bei den Multiblock-Normteilen 2-1 für die Schiene-Straße Radeinheit 9'-23 mit den zugehörigen Drehflansch-Steckverbindungen 2-2, die identische Ausführung auch mit dem Multiblock-Normteil 2-1 und den zugehörigen Drehflansch-Steckverbindungen 2-2, das als Antriebseinheit die Einschwenkung der Solaroberflächen 9'-26 entsprechend dem Stand der Sonne, für die E-POOL Satelliteneinheit 9'-32 durchführt, gewahrt bleibt und gegebenenfalls lediglich die Baugröße differiert. Die Multiblock-Roboter 1-1,1-2,1-3, wie auch alle anderen Transport- und Verteilbaugruppen können die Positions- und Richtungscode Bahnführungen 3-5 jederzeit verlassen und individuell, unter Nutzung der E-POOL Satelliten 9'-32 Steuerungs-Sensorhilfen, der Bordcomputer 9'-1 Unterstützung und der Energieversorgung durch die eigenen Multiblock-Batterieeinheiten, selbstoperierend vorgegebene Ziele ansteuern und bestellte Aufgaben durchführen. E-POOL berechtigte Mitfahrer und Benutzer der E-POOL Individual-PKW's 1-4 und der weiteren E-POOL Transport- und Verteilbaugruppen, werden bei Verlassen und bei der Auffahrt auf die Positions- und Richtungscode-Bahnführungen, selbstätig ausgescheckt bzw. in den Bahnführungs-Leitverbund eingescheckt. Beim Einschecken werden die E-POOL Benutzer über die Multiblock-Robot-Spracheingabe- und Sprachwiedergabe-Einheiten aufgefordert die E-POOL Benutzercodes anzugeben und das Fahrtziel. Der Bordcomputer 9'-1 errechnet die voraussichtliche Fahrtdauer und gibt im Benutzerdialog, weitere Antworten, wie Fahrtkosten und Wegbeschreibung zur Zielerreichung. Sofern die E-POOL Benutzer mit den Angaben des Bordcomputers 9'-1 einverstanden sind, wird die Fahrt ohne Eingriff der Benutzer, selbstätig bis zum Ziel durchgeführt. E-POOL kompatible Privatfahrzeuge werden unter Besitz der E-POOL Benutzer-Scheckkarten und Angabe der E-POOL Benutzerberechtigung an den jeweiligen Bordcomputer 9'-1, jederzeit zur Nutzung des selbstoperierenden E-POOL-Verbunds, der Positions- und Richtungscode-Bahnführungen 3-5 und der berührungsgeschützen Unterboden- und Überboden Strom- und Kommunikationszuführungen 3-11,3-12 zugelassen und sind somit in der Lage von der Handsteuerung, auf Auftragssteuerung, d.h. selbstätige Zielanfahrt ohne Fahrereingriff umzuschalten.

### Fig. 11

E-POOL Verkehrs- Transport und Verteilbaugruppen werden in E-POOL-Bereitstellungsunterführungen 1-9, die seitlich zu den Fahrbahnen angeordnet sind, für den Leistungs-Abruf bereitgestellt. Außerdem werden hier Wartungsarbeiten und Batterieaufladungen durchgeführt. Hierzu werden die E-POOL-Bereitstellungsunterführungen 1-9 mit berührungsgeschützten Unterboden Strom- und Kommunikationszuführungen 3-5 und mit E-STOPS ausgerüstet. Die Ein- Ausfahrten werden durch horizontal schließbare Rolltore abgedeckt, die durch Multiblock-Normteil Antriebseinheiten 2-1 betätigt werden. Die Multiblock-Straßensoperationsroboter 1-2 führen auf den Fahrbahnen, die Reinigung, Entfernung von Fahrthindernissen, Ausbesserung und Neu-Verlegung berührungsgeschützter Strom- und Kommunikationszuführungen 3-11,3-12 und der Positions- und Richtungscode-Bahnführungen 3-5 auf eigenen Gurt- und Radantriebseinheiten 9'-29,9'-9 durch. Jedoch auch in einem Multiblock-Robot Servicefahrzeug 1-14 und mit Positions- und Richtungscodeverlege-Containern 1-15 zusammengekoppelt und vorausfahrend. Die Positions- und Richtungscodeverlege-Container 1-15 beinhalten das Lackiermaterial für die metallisierte Dünnschichtlackierung der Positions- und Richtungscode-Bahnführungen 3-5 sowie Aufklebefolien als Rollenmaterial. Sie markieren und verlegen in schnellen Arbeitstakten von verfahrbaren Straßen-Farbmarkierungs- und Rollenmaterial-Verlegemaschinen, positioniert und kontrolliert durch die vorausfahrenden Straßenoperations-Roboter 1-2, die Positions- und Richtungscode-Bahnführungen 3-5 in beliebigen Richtungen, Kurven und Steigungen, positions- und richtungsgenau auf den Fahrbahnen.

### Fig. 12, Fig. 13,

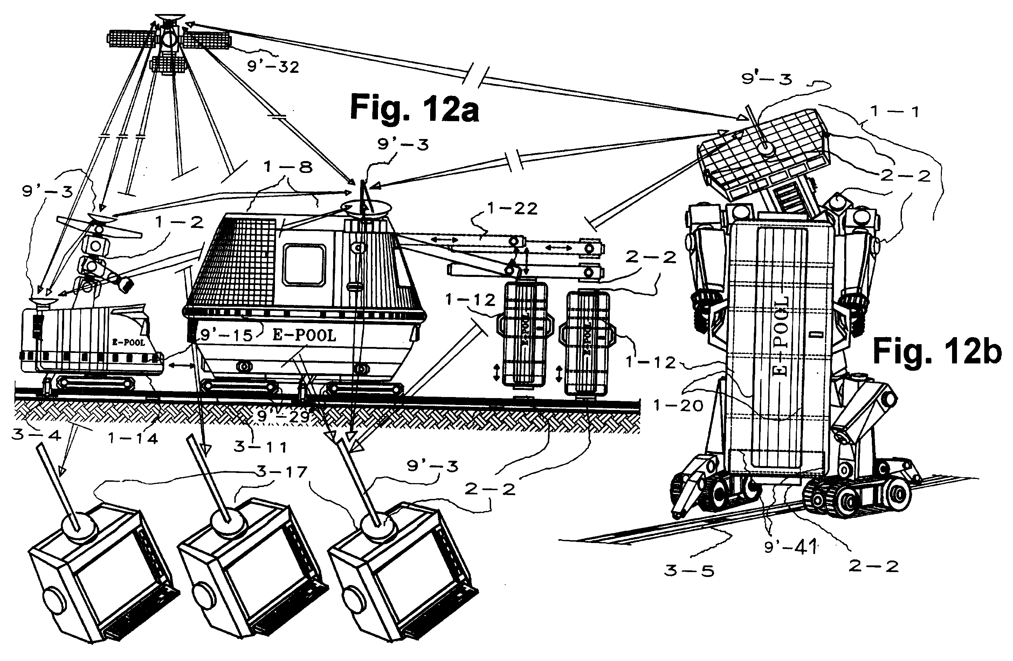

Die verfahrbare Produktions- und Zusammenstellungsbaugruppe 1-8, gemäß der Fig. 12, übernimmt über den Teleskopträger 1-22 die stationären Kühl- und Verteilboxenen 1-12 in den Verteilbaugruppeninnenraum, füllt und aufbereitet sie mit bestellten Waren, wie Lebensmitteln und setzt sie danach auf stationäre Bereitstellungs Drehflansch-Steckverbindungen 2-2 außerhalb ab. Entsprechend sind für die Bereitstellung und Übernahme der stationären Kühl- und Verteilboxen 1-12 sowohl im Boden-, als auch im Dachbereich, Drehflanschsteck-Verbindungen 2-2 vorgesehen. Die Teleskopträger 1-22 besitzen zur Aufnahme der stationären Kühl- und Verteilbox 1-12, ebenfalls Drehflansch-Steckverbindungen 2-2 und können zwei stationäre Kühl- und Verteilboxen 1-12 gleichzeitig aufnehmen und absetzen. Ein Multiblock-Transportroboter 1-1 übernimmt die stationäre Kühl- und Verteilbox 1-12 und transportiert sie bahngeführt zum bestellten Zielpunkt. Gleichzeitig koppelt ein Multiblock-Staßenoperations-Roboter 1-2 in einem Robotservice-Fahrzeug 1-14 an die verfahrbare Produktions- und Zusammenstellungsbaugruppe 1-8 an, um Material für den Straßenservice zu übernehmen. Die einzelnen Fahrwerke bestehen aus Multiblock-Gurtfahrwerks-Einheiten 9'-29. Alle Baugruppen halten kontinuierlich Datenaustausch über die Kommunikationsleiter in den Unterboden Strom- und Kommunikationszuführungen 3-11 und die Antenneneinheiten 9-3, die E-POOL Satelliteneinheiten 9'-32 und den E-POOL Zentralcomputern 3-17. Der Multiblock-Transportroboter 1-1, gemäß der Fig. 13, bewegt sich beim Transport der stationären Kühl- und Verteilbox 1-13 innerhalb einer Haus-Etage. Die Etage besitzt sowohl am Boden als auch unter der Decke, Positions- und Richtungscode-Bahnführungen 3-5. Für die berührungslose Bahnführung, die Richtungs- und Positionskontrolle, erhält der Multiblock-Transportroboter 1-1 an den beiden Fußgelenken Schwenkarmsensoren 9'-20 und zusätzlich im Deckenbereich, an der Robot-Solareinheit die mit dem Robot-Sensorring 9'-36 und hier zentral angeordneter Bilderkennungseinheit 9'-22 und mit der Antennen-Einheit 9'-3 ausgerüstet ist. Außerdem ist dieser Multiblock-Transportroboter 1-1 für den Tranport von schweren Lasten und stationären Kühl- und Verteilboxen 1-12, mit Hydraulik-Flanschaufsteckgehäusen 9'-31 ausgerüstet, die auf die Drehflanssteckverbindungen 2-2 der Multiblock-Robot Normteile 2-1 aufgesteckt sind. Die Hydraulik-Flanschaufsteckgehäuse 9'-31 beinhalten Hydraulikpumpen und Hydraulikflüssigkeiten, die über einen gesonderten Multiflüssigkeits-Kanal 3-2, der die Strom- und Kommunikationskanäle 3-1,3'-1 der Multiblock-Normteile 2-1 mit ihren Stromleitern 3-22 und den Kommunikationsleitern 3-21 ummantelt und Hydraulikflüssigkeit 3-23 zu den Hydraulikventilen der Getriebeeinheiten 9'-7 und an die Greifeinheiten führt und das Drehmoment in den Drehflansch-Steckverbindungen 2-2, zwecks erhöhter Lastaufnahmefähigkeit verstärkt. Die Multiflüssigkeits-Kanäle 3-2, erhalten zusätzlich Steuerungskammern 3'-2 für Steuerungs- und Rückstromflüssigkeiten.

### Fig. 14

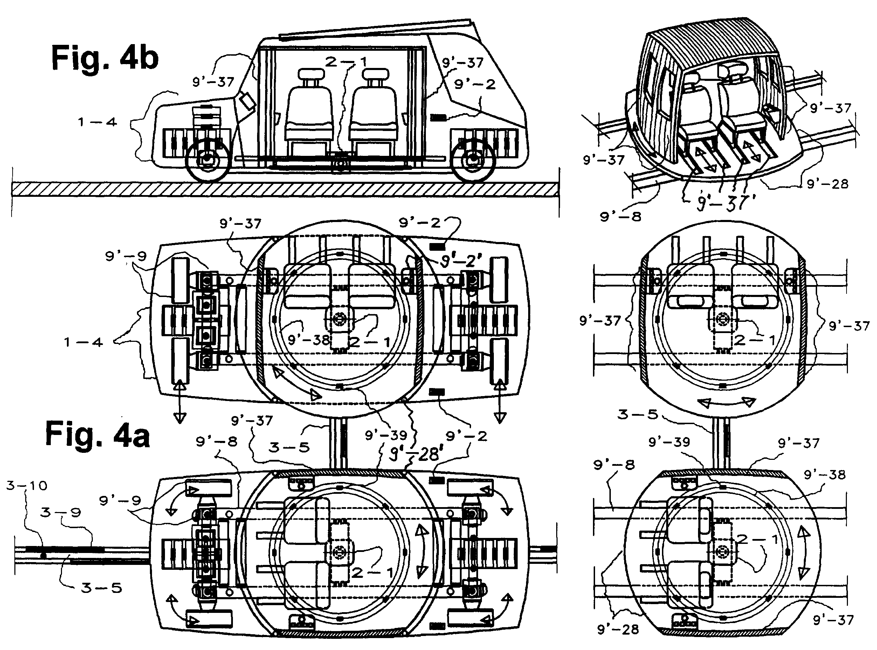

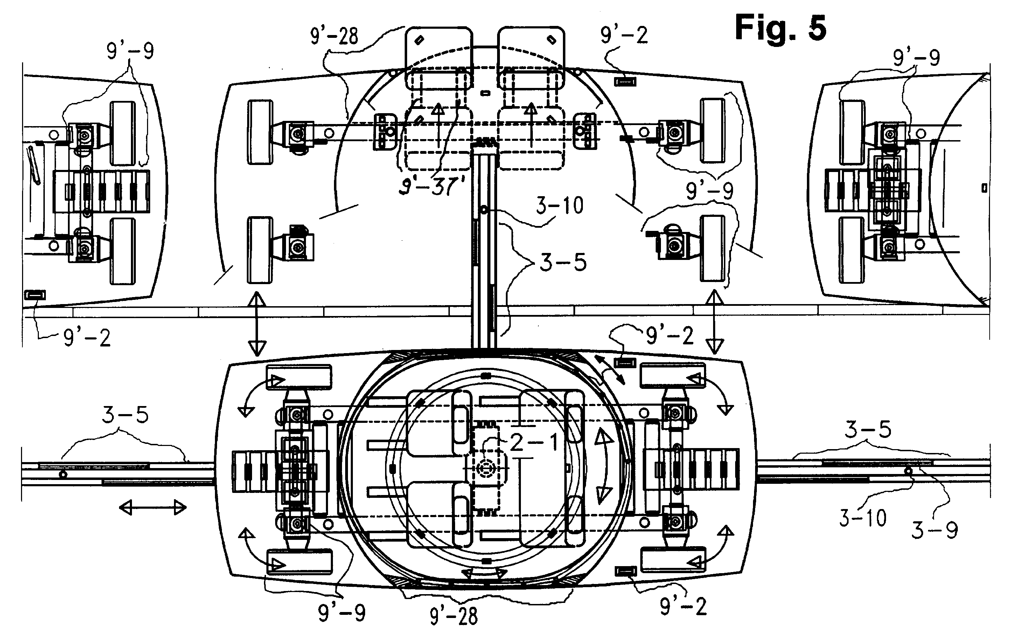

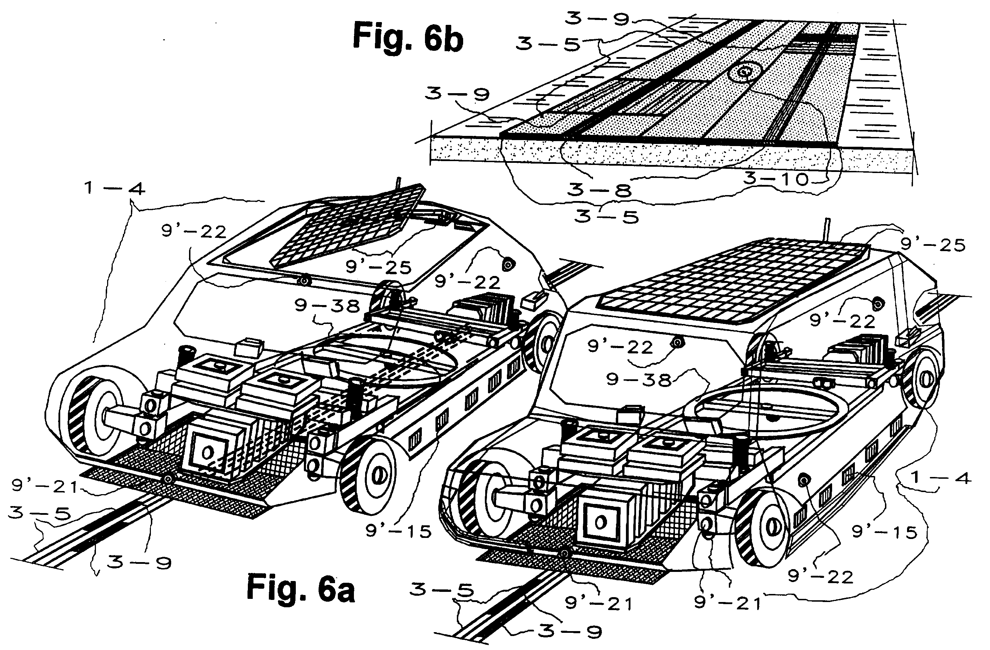

Die verfahrbare Produktions- und Zusammenstellungsbaugruppe 1-8 übernimmt hier, auf Multiblock-Fahrantriebseinheiten 9'-9 verfahrbare Kühl- und Verteilboxen 1-13. Die verfahrbare Produktions- und Zusammenstellungsbaugruppe 1-8 ist ebenfalls mit Rad-Fahreinheiten 9'-9 ausgerüstet. Alle Chassiseinheiten haben die Unterboden Strom- und Kommunikationszuführungsschwenkarme 3-13 ausgeschwenkt und mit den Strom- und Kommunikationsabnehmerwagen 3-4 Zugriff zu den berührungslosen Unterboden Strom- und Kommunikationszuführungen 3-11 und orientieren sich bei der Positionierung an den Positions- und Richtungscode Bahnführungen 3-5 auf der Fahrbahnoberfläche. Alle Verteilbaugruppen sind mit schwenkbaren Segmentsolareinheiten 9'-26 ausgerüstet, die für die Optimierung des Energieertrags durch weitgehende Senkrechtstellung zur Sonneneinstrahlung, die Verteilbaugruppen in einem Neigungswinkel segmentartig umschließen. Die Segmentsolareinheiten 9'-26 werden unabhängig von der jeweiligen Positionierung der Verteilbaugruppen, je nach dem Stand der Sonne, in horizontaler Richtung eingeschwenkt. Dies erfolgt selbatätig, ähnlich wie bei den schwenkbaren Innenraumzellen 9'-28, gemäß der Fig. 4,5 und 6, über Multiblock-Normteile 2-1, Spurringbahnen 9'-38 und Spurringbahn-Rollenlager 9'-39, die hier jedoch in Dachposition angeordnet sind. Im Innenraum der verfahrbaren Produktions- und Zusammenstellungsbaugruppe 1-8 ist ein Serviceroboter 1-3 vorgesehen, der die Zusammenstellung der Bestellungen vornimmt, mit Zugriff auf die konzentrischen, schwenkbaren Ringkörper 1-16 und Beladezugriff zu der im Zugriffsgang 1-20 bereitgestellten, verfahrbaren Kühl- und Verteilbox 1-13. Die von der verfahrbaren Produktions- und Zusammenstellungsbaugruppe 1-8 fertig aufbereiteten, verfahrbaren Kühl- und Verteilboxen 1-13, werden in Serie nebeneinander und hintereinander an Kühlbox-Bereitstellpläätzen, zentriert auf Einfahrt-Ausfahrt Schwenkeinheiten 3-15 der berührungsgeschützten Unterboden Strom- und Kommunikationszuführungen 3-11 aufgesetzt und schwenken danach sofort die Unterboden Strom- und Kommunikationszuführungsschwenkarme 3-13 mit den Strom- und Kommunikationsabnehmerwagen 3-4 in die Unterboden Strom- und Kommunikationszuführungen 3-11 ein. Die verfahrbaren- und auch die stationären Kühl- und Verteilboxen 1-13 sind im unteren Bereich mit Klimatisier-Flanschaufsteckgehäusen 9'-41 ausgeführt, die ebenso wie die Hydraulik-Flanschaufsteckgehäuse 9'-31, gemäß der Fig. 13, die zentralen Multiflüssigkeits-Kanäle 3-2 mit den Steuerungskammern 3'-2 der Multiblock-Robot-Normteile 2-1 nutzen und im Innenraum der Kühl- und Verteilboxen 9'-31, Kälteflüssigkeit für die Kühlung und Klimatisierung verteilen und u.a. Lebensmittel auf Kühlschranktemperatur halten. Die verfahrbaren Kühl- und Verteilboxen 1-13 werden auf den eigenen Rad-Fahreinheiten 9'-9, über die Positions- und Richtungscode-Bahnführungen 3-5, zu den individuellen Bestell- und Zielpunkten weitergeführt.

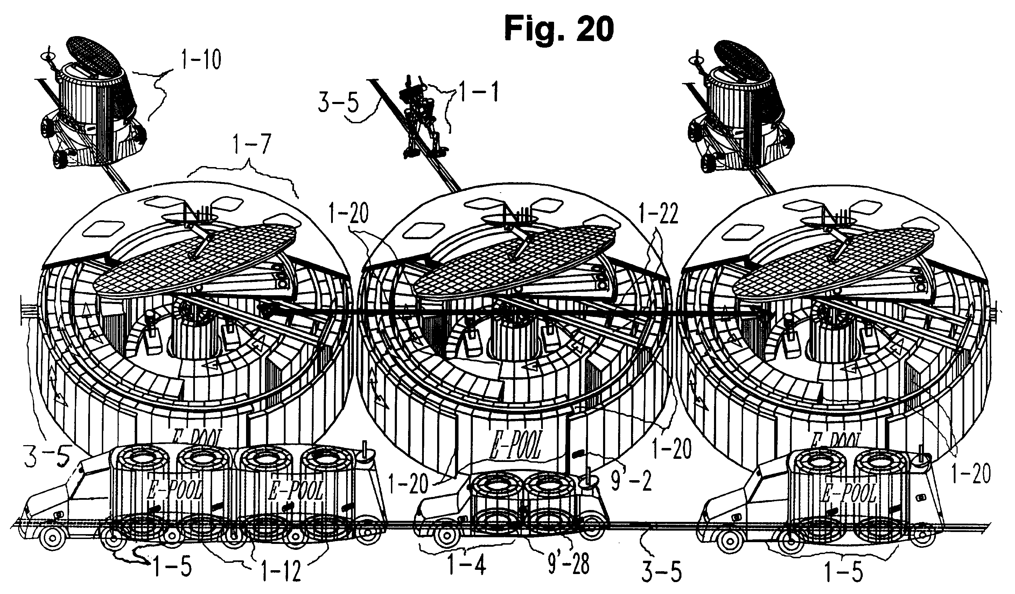

### Fig. 15, bis Fig. 20,

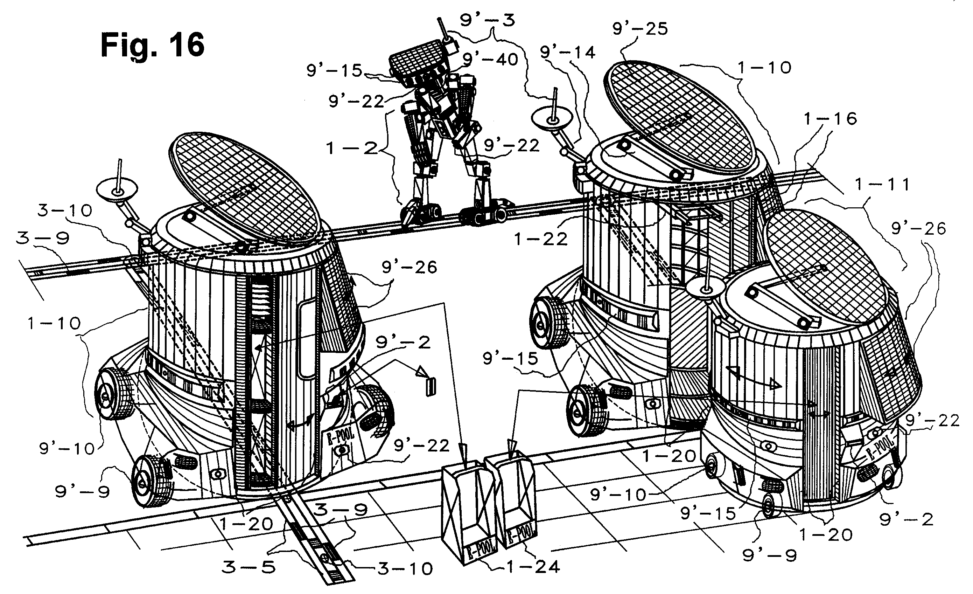

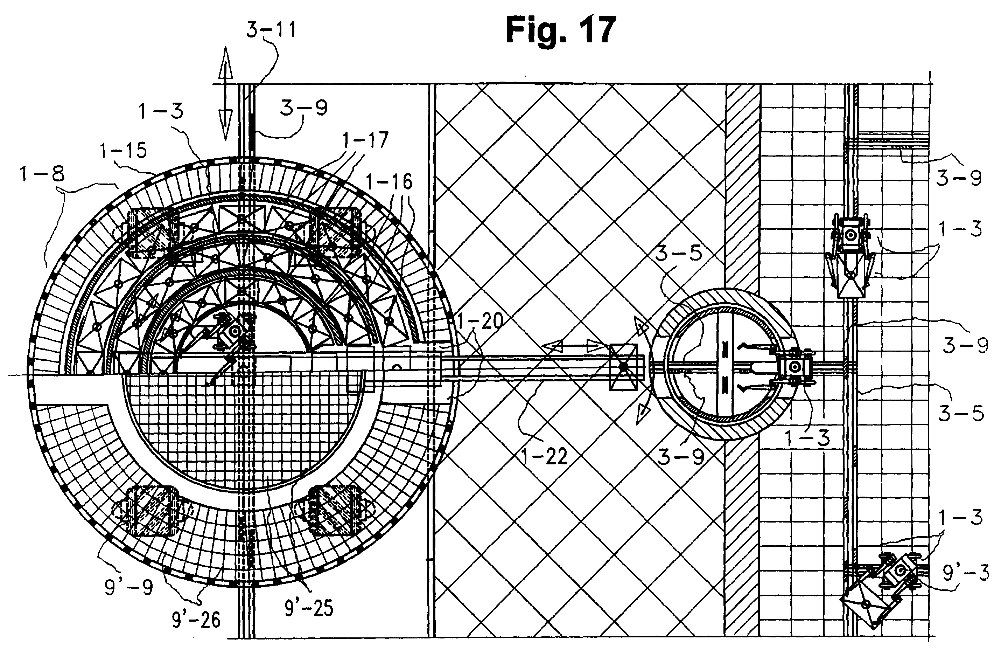

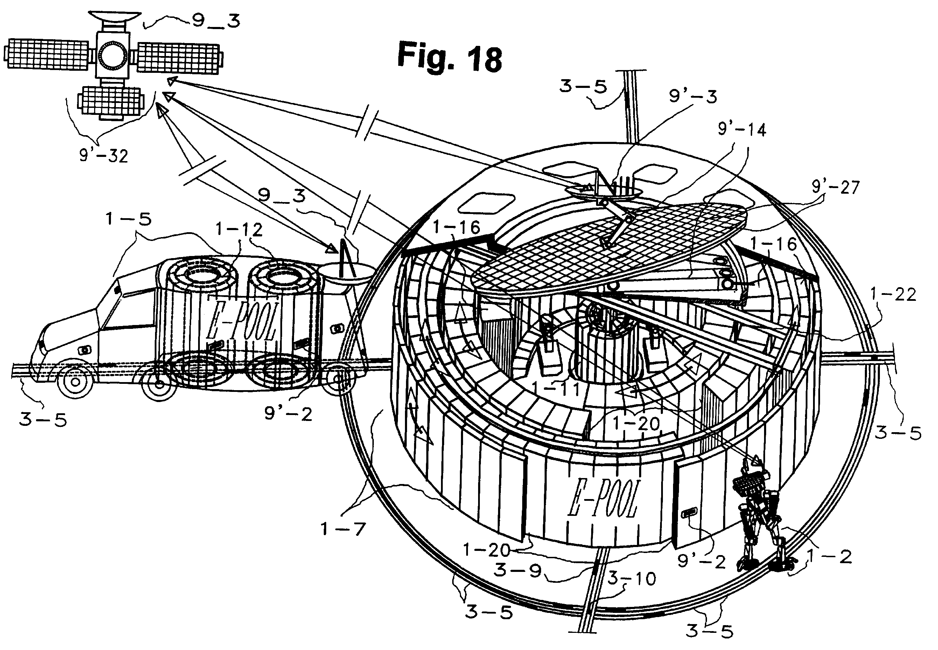

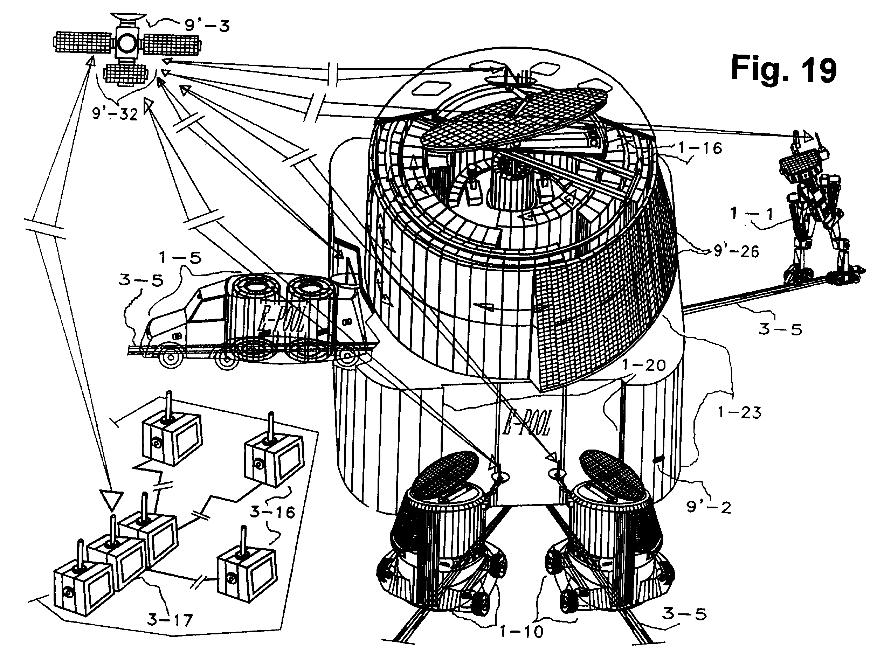

Alle Verteil, Produktions- und Zusammenstellungsbaugruppen 1-7,1-8,1-10,1-11,1-23 eingeschlossen die Kühl und Verteilboxen 1-12,1-13 werden in der Grundstruktur und Funktionsweise, entsprechend der verfahrbare Produktions- und Zusammenstellungsbaugruppe 1-8, gemäß der Fig. 15, ausgeführt, jedoch je nach Anwendung und Größe, mit unterschiedlichen Multiblock-Robot-Normteilen 2-1 und Flanschaufsteckgehäusen 9,9 ausgerüstet. Die konzentrischen, schwenkbaren Ringkörper 1-16 wie auch die Abschottringe 1-17 verfahren mit Multiblock-Fahreinheiten 9'-9 auf der konzentrischen Kreisbahn und werden, ähnlich wie die Innenraum-Schwenkeinheiten 9'-28, gemäß der Fig. 4 bis 6, auf Spurringbahnen 9'-38 geführt. Die schwenkbaren Ringkörper 1-16 nehmen Klimatisier-Flanschaufsteckgehäuse 9'-41 und je nach Aufgabenstellung, Lebensmittel, Material, Waren, Werkzeuge und Vorrichtungen auf. Im Innenraum werden in die schwenkbaren Ringkörper 1-16 auf Multiblock-Normteile 2-1 und die zugehörigen Drehflansch-Steckverbindungen 2-2, Bordkomputer 9'-1 aufgesteckt, sowie Arbeits- und Zusammenstellungskonsolen 1-16'. Die Abschottringe 1-7 schotten die schwenkbaren Ringkörper 1-16 gegeneinander ab, so daß unterschiedlichste Komponenten, Materialien, Halbfabrikate und Werkstoffe dicht nebeneinander, raumoptimal und durch die konzentrische Verschiebetechnik, geschwindigkeitsoptimal verarbeitet, produziert, aufbereitet und zusammengestellt werden. Im Bereich der Zugangs- und Zugriffsöffnungen 1-20 werden die Abschottringe 1-7 und die schwenkbaren Ringkörper 1-16, über Gummidichtungs-Längsrolleneinsätze 9'-28', in vertikaler Richtung nach außen hin abgedichtet, in gleicher Weise wie die Innenraumschwenkeinheiten 9'-28, gemäß der Fig. 4.. Das gesamte Außenoberteil ist gesondert um die Mittelachse schwenkbar und weist ebenso das Unterteil einen Zugriffsgang bzw. Zugriffsöffnung 1-20 auf. Jeder schwenkbare Ringkörper 1-16 und Abschottring 1-7 weist ebenfalls einen Zugriffsgang- bzw. Zugriffsöffnung auf. Der Zugang und der Zugriff zu den einzelnen schwenkbaren Ringkörpern 1-16 von innen und außen ist möglich, wenn die Zugänge- und Zugriffsöffnungen 1-20 in eine Linie eingeschwenkt werden. Der konzentrische Außenring 1-16 nimmt auf Multiblock-Fahrwerkseinheiten 9'-9 den Teleskopträger 1-22 für die konzentrische Verfahrbarkeit im Innenraum auf. Der Teleskopträger 1-22 ist ausgerüstet für die Aufnahme von Lasten, Multiblock-Robotern 1-1,1-2,1-3, stationäre Kühl- und Verteilboxenen 1-12 und den Transport, wie auch für die Verfahrbarkeit von außen nach innen und umgekehrt, sowie für die Materialbewegung und Arbeitsunterstützung der Multiblock-Roboter 1-1,1-2,1-3 im Innerenraum. Die Multiblock-Roboter 1-1,1-2,1-3 werden für die Verfahrbarkeit auf den Teleskopträgem 1-22 und die bodenfreie Innen- und Außenarbeit, an den seitlichen Drehflansch-Steckverbindungen 2-2 der Robot-Solareinheit, gemäß der Fig. 12, mit Robot-Überkopf-Fahrantriebseinheiten und Laufrollen ausgerüstet, entsprechend den Laufbahngrößen der Teleskopträger 1-22, so daß sie durch die Robot-Solareinheit getragen, hängend in den Teleskopträgern 1-22 verfahrbar sind. Die Verteil, Produktions- und Zusammenstellungsbaugruppen 1-7,1-8,1-10,1-11,1-23 erhalten außer den schwenkbaren Segmentsolareinheiten 9'-26 am Außenumfang, im Dachbereich kreisförmige Dachsolareinheiten 9'-25, die mittels der Multiblock-Robotschwenkarme 9'-14, entsprechend dem jeweiligen Stand der Sonne, horizontal und vertikal adaptiert werden. Die integrierte Antenneneinheit 9'-3 ist für den optimalen Datenaustausch mit E-POOL Satelliten 9'-32, durch den gesondert installierten Multiblock-Robotschwenkarm 9'-14, unabhängig von der kreisförmigen Dachsolareinheit 9'-25, individuell schwenkbar. Im Dachbereich werden außerdem Klimatisier-Abluftschlitze 9'-41' vorgesehen. Die Fahrt-Sicherungseinrichtungen, Fahreinheiten, Stromzugriff- und Signalverarbeitung, Sensorik, sowie Bedienungs- Zugangs- und Zugriffseinrichtungen, entsprechen ansonsten denen der E-POOL-Transportbaugruppen. Die verfahrbaren Produktions- und Zusammenstellungsbaugruppen 1-8 sind die größten Verteilbaugruppen, übernehmen Materialien und Waren für die eigene Produktion und Zusammenstellung, für die Weitergabe an stationäre und verfahrbare Kühlboxen 1-12,1-13 und für die Zusammenstellung von Waren und die Weitergabe an Zustell-Verteilbaugruppen 1-10, gemäß der Fig. 16 und für Direktentnahme-Verteilbaugruppen 1-11. Die Zustell-Verteilbaugruppen 1-10 sind Pendel-Verteilbaugruppen für die Warenübernahme von Transportbaugruppen, von den stationären Produktions- und Zusammenstellungsbaugruppen 1-7 und 1-23, gemäß der Fig. 18 bis 20 und von den verfahrbaren Produktions- und Zusammenstellungsbaugruppen 1-8, für die interne Weiterverarbeitung, Aufbereitung und Übergabe durch Multiblock-Transportroboter 1-1 an die Direktentnahme-Verteilbaugruppen 1-11, die als kleinste Verteilbaugruppeneinheit bis vor den Hauseingang oder auf das Firmengelände des Bestellers fahren, oder aber die Übergabe an beliebige andere E-POOL-Transport- und Verteilbaugruppen durchführen. Die konzentrischcen Ringkörper 1-16 der verfahrbare Produktions- und Zusammenstellungsbaugruppen 1-10 und der Direktentnahme-Verteilbaugruppen 1-11, enthalten Einkaufs-Container 1-24, Fachbehälter und Fachauflagen. Die Einkaufs-Container 1-24 werden, wie die sonstigen Waren und Bestellgüter, den Bestellern durch die Multiblock-Transportroboter 1-1 bis zum Hauseingang zugestellt und von dort durch die Multiblock-Serviceroboter 1-3, den Bestellern bis die Arbeitsräume, Labors, Krankenhausetagen und Privat-Wohnungen überführt. Für die Direktentnahme von Waren und Bestellgüter durch die E-POOL Besteller aus den einzelnen Baugruppen sowie den Kühl- und Verteilboxen 1-12,1-13, werden die E-POOL Benutzerscheckkarten in die Scheckkarten Leser 9'-2 gesteckt. Die konzentrischen Ringkörper 1-16 schwenken in Richtung der Zugriffsöffnungen 1-20 ein. Der für den Besteller reservierte Zugriffssektor zu den konzentrischen Ringkörpern 1-16 öffnet sich und der E-POOL Benutzer erhält Zugriff zu seiner Bestellung, zu seinem Einkaufscontainer 1-24 und seinen Waren in den Fachablagen des reservierten Zugriffsektors. Die verfahrbare Produktions- und Zusammenstellungsbaugruppe 1-8, gemäß der Fig. 17, führt über die Teleskopträger 1-22, die direkte Haus-Zustellung von größeren Wareneinheiten durch und überführt die Waren in den Hauslift. Von dort werden die Waren von Positions- und Richtungscode 3-5 bahngeführten Multiblock-Servicerobotern 1-3 den Hausetagen, Büros, den Wohnungen und sonstigen Zielbestimmungen der E-POOL Besteller zugeführt. Die stationäre Produktions- und Zusammenstellungsbaugruppe 1-7, gemäß der Fig. 18, umfaßt drei konzentrische Ringkörper 1-16. Im Innenraum sind Produktions- und Zusammenstellungsmaschinen aufgestellt. Eine Direktentnahme-Baugruppe 1-11 ist zur Warenübernahme durch die Zugangsöffnungen 1-20 in den Innenraum eingefahren. Über Positions- und Richtungscode-Bahnführungen 3-5 die von Außenfahrbahnen bis in den Innenraum führen, ist die Zufahrt von Transport- und Verteilbaugruppen aus Nord-, Süd-, Ost- und Westrichtung vorgesehen. Hierzu werden die Zugangsöffnungen 1-20 in den konzentrischen Ringkörpern 1-16 und den Abschottringen 1-17, gemäß der Fig.15, sowie die schwenkbare Außenwand, zur Mittellinie der Positions- und Richtungscode-Bahnführungen 3-5 hin eingeschwenkt. Der dargestellte Schwerlasttransporter 1-5 mit installierten, stationären Kühl- und Verteilboxen (1-12), hat in der stationären Produktions- und Zusammenstellungsbaugruppe 1-7 neue Warenbestellungen übernommen und verläßt die Anlage bahngeführt. Eine zusätzliche Positions- und Richtungscode-Bahnführung 3-5, rund um die stationäre Produktions- und Zusammenstellungsbaugruppe 1-7, ist für die Bahnführung eines Multiblock-Straßenoperationsrobots 1-2 vorgesehen, der die Bahnführungen von und zu der Anlage kontrolliert, wartet und reinigt und der außerdem auf der kreisförmigen Positions- und Richtungscode Bahnführung 3-5, den Außenbereich gegen unbefugten Zugang und Zugriff sichert. Die doppelstöckige Produktions- und Zusammenstellungsbaugruppe 1-23 besitzt im Erdgeschoß einen separaten Bereitstellungsraum für Transportfahrzeuge und Verteilbaugruppen und im Obergeschoß eine Produktions- und Zusammenstellungsbaugruppe 1-7, gemäß der Fig. 19. Hier erfolgt die auch doppelspurige, bahngeführte Zu- und Abfahrt über Positions- und Richtungscode-Bahnführungen 3-5, sowie die Beladung und Warenübergabe an E-POOL Transportbaugruppen, von den E-POOL Individual-PKW's 1-4 bis zu den Schiene-Straße Transportern 1-6 und allen Verteilbaugruppen. Alle selbstoperierenden Prozeßketten, der Transport und Verteilbaugruppen und der Produktions- und Zusammenstellungsbaugruppe 1-23, ausgelöst über E-POOL Individual Computer 3-16 und kompatible Computereinheiten, erfolgen im Datenaustausch und Verbund über das elektronische E-POOL Netzwerk, mit den E-POOL Zentralcomputern 3-17, den E-POOL Satelliten 9'-32, die Antenneneinheiten 9-3, die Sensor-Flanschaufsteckgehäuse und Sensoraußenringe 9'-15, die Bordcomputer 9-1 und auch über die Informationsleitungen innerhalb der Unterboden- und Überboden Strom- und Kommunikationszuführungen 3-11,3-12. Die drei Produktions- und Zusammenstellungsbaugruppen 1-7, die gemäß der Fig. 20, in Serienkombination nebeneinander angeordnet sind, werden durch die zentral verlaufenden Positions- und Richtungscode-Bahnführungen 3-5 durchquert und erlauben die bahngeführte Durchfahrt durch die gesamte Serienkombination. Hierzu werden alle Zugriffsgänge 1-20 in die Mittellinie der Positions- und Richtungscode-Bahnführungen 3-5 eingeschwenkt. Somit ist die Gesamtdurchquerung gewährleistet und die ungehinderte Durchfahrt von einer Produktions- und Zusammenstellgruppe 1-7 zur anderen. Die Transport-Baugruppen aufder vorgelagerten Positions- und Richtungscode-Bahnführung 3-5, werden über die Teleskopträger 1-22 beladen, ohne daß diese in die Serienkombination einfahren müssen. Die Positions- und Bahnführungen 3-5 auf der gegenüberliegenden Seite, führen dagegen die Zustell-Verteilbaugruppen 1-10 und den Multiblock-Transportroboter 1-1 direkt in den Innenraum der Produktions- und Zusammenstellungsbaugruppen 1-7, zur selbstoperierenden Warenübernahme und für Transportoperationen.

## Patentansprüche

1. Multiblock-Robot System, dadurch gekennzeichnet, daß elektronische und elektrische E-POOL Netzwerke gebildet werden, bestehend aus Multiblock- Individual Computereinheiten (3-16), Zentralcomputern (3-17), Bordcomputern (9'-1), Satelliteneinheiten (9'-32), Antenneneinheiten (9'-3), offenen und berührungsgeschützten Unterboden- und Überboden Strom- und Kommunikationszuführungen (3-11),(3-12),(3-20) mit internen Kontrollpunkt-Kennungsträgern (3-10), Positions- und Richtungscode-Bahnführungen (3-5) die auf die Fahrbahnoberfläche und identisch dazu auf die Oberseite der berührungsgeschützten Strom- und Kommunikationszuführungen (3-11),(3-12) in metallisierter Dünnschichtlackierung und metallisierten Dünnschicht-Aufklebefolien, mit integrierten Induktivleiterstreifen (3-8) und Positions-, Richtungscode-, und Kontrollpunkt-Kennungsträgern (3-9),)(3-10) aufgetragen sind und die über Multiblock-Robot Normteil (2-1) interne Strom- und Kommunikationsleitungen (3-21),(3-22),(3-24), über Dachsolareinheiten (9'-25), Segment-solareinheiten (9'-26), Solar- und Windkraftanlagen (1-21), sowie über batterieversorgende E-STOPS, weitgehend energieautonom sind und daß im gegenseitigen Datenaustausch zueinander, gesteuert und energierversorgt von den elektronischen und elektrischen E-POOL Netzwerken, ein selbstoperierender E-POOL Verbund gebildet wird, der Multiblock-Transportroboter (1-1), Straßenoperationsroboter (1-2), Serviceroboter (1-3), Verkehrs- und Transportbaugruppen mit Multiblock-Robot Servicefahrzeugen (1-14), Individual PKW's und Kleintransportern (1-4), Schwerlaststraßentransporter und Busse (1-5) und Schiene-Straße Transporter (1-6), Verteilbaugruppen mit verfahrbaren Produktions- und Zusammenstellungsbaugruppen (1-8), Zustell- und Direktentnahme-Baugruppen (1-10),(1-11), verfahrbare und stationäre Kühl- und Verteilboxen (1-12),(1-13), sowie stationäre Produktions- und Zusammenstellungsbaugruppen (1-17), (1-23) umfaßt, daß von E-POOL Benutzern über die E-POOL Computereinheiten (3-16) und hierzu kompatiblen Computern, mit E-POOL Bestellsoftware, Bestellungen und Aufträge, Leistungen und Lieferungen an die E-POOL Zentralcomputer (3-17) übermittelt wird, die durch den selbstoperierenden E-POOL Verbund produziert, zusammengestellt, verteilt, transportiert und zielpunktgenau bis zum Firmengelände, dem Institutionsgebäude, der Hausetage, der Privat-Wohnung geliefert und an jedem anderen, bestellten Zielpunkt bereitgestellt werden.

2. Multiblock-Robot System, nach Anspruch 1, dadurch gekennzeichnet, daß die berührungsgeschützten Unterboden-Strom- und Kommunikationszuführungen (3-11) in Abständen zueinander, Wasserablaufschlitze aufweisen und daß unter den Unterboden-Strom- und Kommunikationszuführungen (3-11) längsverlaufende Wasserablaufkanäle (9'-24) vorgesehen sind, die in größeren Abständen zueinander über Multibllock-Abwasserpumpen (9'-33) Regenwasser in die öffentliche Kanalisation ableiten, daß für die weitgehend E-POOL autonome Stromversorgung der Unterboden- und Überboden-Strom- und Kommunikationszuführungen (3-11),(3-12), Multiblock-Solar-Windkraftanlagen (1-21) genutzt werden, die mittig zu den Fahrtrichtungen und auch seitlich, am Straßenrand aufgestellt sind und daß die Überboden- und Unterboden-Strom- und Kommunikationszuführungen (3-11) und (3-12) durch Flanschaufsteckgehäuse (9'-19), direkt mit den Strom- und Informationskanälen der mittig und seitlich zu den Fahrbahnen installierten Multiblock Solar-Windkraftanlagen (1-21) verbunden sind.

3. Multiblock-Robot System, nach einem der Ansprüche 1 bis 2, dadurch gekennzeichnet, daß die Verkehrs-, Transport, Verteil- und Produktionsbaugruppen mit Flanschaufsteckgehäusen für Multiblock-Robot Spracheingabe und E-POOL Scheckkartenlesern (9'-2) für E-POOL Benutzer Scheckkarten mit Programm-Steuerungscode und codierter Zugangs- und Zugriffsberechtigung ausgerüstet sind, daß die Multiblock-Normteile (2-1) und Flanschaufsteckgehäuse zu mehrachsigen Multiblock- Unterboden- und Überboden-Strom- und Kommunikationszuführungsschwenkarme (3-13), (3-14) mit Strom- und Kommunikationsabnehmerwagen (3-4) zusammengesteckt werden, die mit berührungslosen Sensor-Einheiten (9'-20) ausgerüstet sind, für die Bahnführung, Positionierung und Positionskontrolle durch Abtastung der Positions- und Richtungscode-Bahnführungen (3-5) und daß Einfahrt-Ausfahrt Schwenkeinheiten (3-15) für das Ein- und Ausschwenken der Strom- und Kommunikationsabnehmerwagen (3-4) ohne Fahrtunterbrechung vorgesehen sind.

4. Multiblock-Robot System, nach einem der Ansprüche 1 bis 3, dadurch gekennzeichnet, daß für die Ortung von Gegenständen und Personen im Bahnumfeld, Sensoraußenringe (9'-15) eingesetzt werden, die mit Ortungs-Sensoren bestückt sind, daß allseitig Bilderkennungseinheiten (9'-22) vorgesehen werden und gleichzeitig über die Chassis-Sensoreinheiten (9'-21) die Entfernung zu Gegenständen und beweglichen Hindernissen, wie vorausfahrenden Fahrzeugen, gemessen und über die Bordcomputer (9'-1), die Geschwindigkeit der Fahrantriebseinheiten (9'-9),(9'-23),(9'-29) entsprechend angepaßt wird, daß Innenraumschwenkeinheiten (9'-28) mit einem Karosserieüberbau (9'-37) und Fahrzeug-Seitenfenstereinsatz, sowie Einschub-Auschubeinheiten (9'-37') für Gütertransport, Multiblock-Robot- und Personenbeförderung vorgesehen sind, die auf Chassis-Spurringbahnen (9'-38) genau in der Mittelachse der Verkehrs-, Transport-, und Verteilbaugruppen aufliegen, um 360° frei schwenkbar sind und die Zugangsöffnungen seitlich und nach hinten durch Einschwenken freigeben und bei der Rückschwenkung durch vertikale Gummidichtungs-Längsrolleneinsätze (9'-28') dicht nach außen hin verschlossen sind, daß die Innenwände der Innenraumschwenkeinheiten (9'-28) links und rechts neben den Sitzen mit Handbedienungs-Kontrolleinheiten (9'-2') ausgerüstet sind, die Fahrzeug-Lenkkontrolleinheiten umfassen, für die jederzeitige Fahrzeug-Lenkungsübernahme durch die E-POOL Mitfahrer und Teil- oder Ganz-Abschaltung der selbstoperierenden Funktionen, daß hier zusätzlich Eingabetastaturen und Multiblock-Robot Sprach-Steuerungseinheiten für den Bedienungsdialog mit dem Bordcomputer (9'-1) einbaut sind und außerdem E-POOL Scheckkartenleseeinheiten (9'-2), die als zweite erforderliche Nutzungs-Berechtigungskontrollprüfung, die Benutzungs-Berechtigungskontrolle erfassen und das jeweilige Fahrzeug für die Benutzung freischalten, neben der ersten Nutzungsberechtigungskontrollprüfung bei Fahrzeugübernahme durch E-POOL Benutzer über die E-POOL Scheckkartenleseeinheiten (9'-2), die an den Außenkontouren eingesetzt sind und die Steuerungsimpulse auslösen, für die Einschwenkung der Innenraumschwenkeinheiten (9'-28) durch das zentral eingesetzte Multiblock-Normteil (2-1) und die Freigabe des ungehinderten Einstiegs und zur Ladungsübernahme und daß die Innenraumschwenkeinheiten (9'-28) für den Transport von Gegenständen, Lasten, Robotern und Personen, die entsprechenden Inneneinrichtungen wie Paletten, Lastgabeln, Lastaufnahmecontainer, Gurtförderer, zwei oder mehr Personensitze erhalten.

5. Multiblock-Robot System, nach einem der Ansprüche 1 bis 4, dadurch gekennzeichnet, daß E-POOL Verkehrs- Transport und Verteilbaugruppen in seitlich zu den Fahrbahnen angeordnet E-POOL-Bereitstellungsunterführungen (1-9) für den Leistungs-Abruf, für Wartungsarbeiten und Batterieaufladungen bereitgestellt werden und hierfür mit berührungsgeschützten Unterboden-Strom- und Kommunikationszuführungen (3-5) und mit E-STOPS ausgerüstet sind, daß die Ein- Ausfahrten durch horizontal schließbare Rolltore abgedeckt sind, die durch Multiblock-Antriebseinheiten betätigt werden, daß die Multiblock-Straßenoperations-Roboter (1-2) die interne Wartung durchführen und außerhalb auf den Fahrbahnen, die Reinigung, Entfernung von Fahrthindernissen, Ausbesserung und Neu-Verlegung berührungsgeschützter Strom- und Kommunikationszuführungen (3-11),(3-12) und der Positions- und Richtungscode-Bahnführungen (3-5) durchführen und hierfür auf eigenen Gurt- und Radantriebseinheiten (9'-29),(9'-9) und auch in einem Multiblock-Robot Servicefahrzeug (1-14) vorausfahrend, mit Positions- und Richtungscodeverlege-Containem (1-15) zusammengekoppelt sind, daß die Positions- und Richtungscodeverlege-Container (1-15) das Lackiermaterial für die metallisierte Dünnschichtlackierung der Positions- und Richtungscode-Bahnführungen (3-5) und metallisierten Klebefolien als Rollenmaterial beinhalten und in schnellen Arbeitstakten einer verfahrbaren Straßen-Farbmarkierungs- und Rollenmaterial-Verlegemaschine, positioniert und kontrolliert durch die vorausfahrenden Straßenoperations-Roboter (1-2), die Positions- und Richtungscode-Bahnführungen (3-5) in beliebigen Richtungen, Kurven und Steigungen, positions- und richtungsgenau auf die Fahrbahnen auftragen.

6. Multiblock-Robot System, nach einem der Ansprüche 1-5, dadurch gekennzeichnet, daß die Multiblock-Roboter (1-1) für den Transport und die Zustellung in Etagebauwerken, sowohl am Boden als auch unter der Decke, Positions- und Richtungscode-Bahnführungen (3-5) erhalten und für die berührungslose Bahnführung, Richtungs- und Positionskontrolle, an den beiden Fußgelenken Schwenkarmsensoren (9'-20) erhalten und an der Robot-Solareinheit im Deckenbereich und daß die Robot-Solareinheit mit dem Robot-Sensorring (9'-36) und zentral angeordneter Bilderkennungseinheit (9'-22) und der Antennen-Einheit (9'-3) ausgerüstet ist, daß für den Transport von schweren Lasten und stationären Kühl- und Verteilboxen (1-12), Hydraulik-Flanschaufsteckgehäuse (9'-31) vorgesehen werden, die mit Hydraulik-Flanschaufsteckgehäusen (9'-31) ausgerüstet und auf die Drehflanssteckverbindungen (2-2) der Multiblock-Robot Normteile (2-1) aufgesteckt sind und Hydraulik-Flanschaufsteckgehäuse (9'-31), Hydraulikpumpen und Hydraulikflüssigkeiten beinhalten, die über einen gesonderten Multiflüssigkeits-Kanal (3-2), der die Strom- und Kommunikationskanäle (3-1),(3'-1) der Multiblock-Normteile (2-1), mit ihren Stromleitern (3-22) und den Kommunikationsleitern (3-21) ummantelt, Hydraulikflüssigkeit (3-23) zu den Hydraulikventilen der Getriebeeinheiten (9'-7) und den Greifeinheiten führt und das Drehmoment in den Drehflansch-Steckverbindungen (2-2) zwecks erhöhter Lastaufnahmefähigkeit verstärkt und daß die Multiflüssigkeits-Kanäle (3-2) Steuerungskammern (3'-2) für Steuerungs- und Rückstromflüssigkeiten erhalten.

7. Multiblock-Robot System, nach einem der Ansprüche 1 bis 6, dadurch gekennzeichnet, daß die Schiene-Straße Transporter (1-6) wie die Schwerlaststraßentransporter und Busse (1-5) ausgeführt werden und zusätzlich über Schiene-Straße Radeinheiten (9'-23) sowohl schienengebunden, als auch auf Straßenfahrbahnen eingesetzt werden, daß die Schiene-Straßenrad F (9'-23) sowohl in Achsrichtung direkt neben dem Straßenrad 9'-35 angeordnet wird und auch durch Zwischenschaltung eines Multiblock-Normteils 2-1, daß außerdem das Schienenrad 9'-34 und das Straßenrad 9'-35 auch gesondert, in Fahrtrichtung hintereinander angeordnet und je nach Schiene- oder Straße-Nutzung, jeweils getrennt voneinander, in gleicher Weise wie die Strom- und Kommunikationszuführungsschwenkarme 3-14, über Multiblock-Normteile 2-1 hoch- und runtergeschwenkt werden, daß bei Kontakt der Schienenräder 9'-34 mit den Schienen, die Straßenräder 9'-35 hochgeschwenkt und bei Straßenauffahrt die Straßenräder 9'-35 runtergeschwenkt werden und bei Kontakt mit der Fahrbahnoberfläche und Fahrlastübernahme, die Schienenräder 9'-34 hochgeschwenkt werden und daß Positions- und Richtungscode und Kontrollpunkt Kennungsträger (3-9),(3-10) auf die Schwellen des Schienenköpers aufgesetzt sind und von den Sensoren (9'-20),(9'-21) der Unterboden- und Überboden-Strom- und Kommunikationszuführungsschwenkarme (3-13),(3-14) und der Multiblock-Normteile (2-1) berührungslos abgetastet werden, daß die Strom- und Kommunikationszuführung durch die offenen Überkopf-Strom- und Kommunikationszuführungen (3-20), mittels des Dach-Strom- und Kommunikationsabnehmerschwenkarms (9'-18) erfolgt und daß am Übergang von der Schiene zur Straße und gleichermaßen von der Straße zur Schiene, der Beginn bzw. das Ende des Verlaufs einer berührungsgeschützten Unterboden-Strom- und Kommunikationszuführung (3-11) mit einer Einfahrt- Ausfahrteinheit 3-15 vorgesehen ist und die Rückschwenkung der Überkopf- Strom- und Kommunikationszuführungsschwenkarme (3-14) und gleichzeitig die Einschwenkung der Unterboden-Strom- und Kommunikationszuführungsschwenkarme (3-14) in die Einfahrt- Ausfahrteinheit 3-15 der Unterboden Strom- und Kommunikationszuführungen (3-11) erfolgt und daß je nach Fahrbahnausstattung, auch seitlich zur Fahrtrichtung angeordnete Überboden Strom- und Kommunikationszuführungen (3-12) genutzt werden.

8. Multiblock-Robot System, nach einem der Ansprüche 1-7, dadurch gekennzeichnet, daß die Verteilbaugruppen mit den verfahrbaren Produktions- und Zusammenstellungsbaugruppen (1-8), Zustell- und Direktentnahme-Baugruppen (1-10),(1-11), verfahrbaren und stationären Kühl- und Verteilboxen (1-12),(1-13), sowie die stationären Produktions- und Zusammenstellungsbaugruppen (1-17),(1-23), mit konzentrischen Verschieberingen (1-16) für Material und Vorrichtungen und mit Zugriffsgängen und Zugriffsöffnungen (1-20) ausgerüstet sind und Multiblock-Robot Fahrantriebe erhalten, die auf internen Positions- und Richtungscode-Bahnführungen (3-5) und berührungsgeschützten Strom- und Kommunikationszuführungen (3-11),(3-12), auf ihren Kreisbahnen geführt werden und daß auf den äußeren, konzentrischen Verschieberingen (1-16) Teleskopträger (1-22) auf Multiblock-Robot Fahrantrieben verfahren und Multiblock-Robots (1-1),(1-2),(1-3) aufnehmen, und den Transport wie auch die Verfahrbarkeit auf den Teleskopträgern (1-22) von außen nach innen und umgekehrt, sowie für die Materialbewegung und Arbeitsunterstützung der Multiblock-Roboter (1-1), (1-2),(1-3) im Innenraum, daß außerdem die Multiblock-Roboter (1-1),(1-2),(1-3) für die Verfahrbarkeit auf den Teleskopträgern (1-22) und die bodenfreie Innen- und Außenarbeit, an den seitlichen Drehflansch-Steckverbindungen (2-2) der Robot-Solareinheit, mit Robot-Überkopf-Fahrantriebseinheiten und Laufrollen ausgerüstet werden, so daß sie durch die Robot-Solareinheit getragen, hängend in den Teleskopträgern (1-22) verfahrbar sind, daß zusätzlich an den Teleskopträgern (1-22), Drehflansch-Steckverbindungen (2-2) für den Transport von stationären Kühl- und Verteilboxenen (1-12),(1-13) aufgesetzt sind und für die Verfahrbarkeit von außen nach innen und die Aufnahme und Absetzung auf bodeninstallierte, identische Drehflansch-Steckverbindungen (1-22) vorgesehen ist, daß die Multiblock-Robots (1-1),(1-2),(1-3) zusätzlich boden-bahngeführt auf Positions- und Richtungscode-Bahnführungen (3-5) innerhalb der Systembaugruppen eingesetzt sind und über die Zugriffsgänge (1-20) von außen nach innen und umgekehrt verfahren werden, daß die verfahrbaren und stationären Kühl- und Verteilboxenen (1-12),(1-13), sowie die verfahrbaren und stationären Produktions- und Zusammenstellungsbaugruppen (1-17),(1-23) mit Klimatisier-Flanschaufsteckgehäusen 9'-41 ausgeführt sind, die ebenso wie die Hydraulik-Flanschaufsteckgehäuse (9'-31), die zentralen Multiflüssigkeits-Kanäle (3-2) mit den Steuerungskammern (3'-2) der Multiblock-Robot-Normteile (2-1) nutzen und im Innenraum für die Klimatisierung sorgen und für den Luft-Austausch nach außen, mit Klimatisier-Abluftschlitzen (9'-41') ausgerüstet sind, daß die konzentrischen Ringkörper 1-16 der verfahrbare Produktions- und Zusammenstellungsbaugruppen 1-10 und der Direktentnahme-Verteilbaugruppen 1-11, Einkaufs-Container 1-24, Fachbehälter und Fachauflagen erhalten und die Einkaufs-Container 1-24, wie die sonstigen Waren und Bestellgüter, den Bestellern durch die Multiblock-Transportroboter 1-1 bis zum Hauseingang zugestellt und von dort durch die Multiblock-Serviceroboter 1-3, zu den Arbeitsräumen, Büros, Labors, Krankenhausetagen und Privat-Wohnungen überführt wird, daß die Direktentnahme von Waren und Bestellgüter durch die E-POOL Besteller aus den einzelnen Baugruppen, sowie den Kühl- und Verteilboxen 1-12,1-13, dadurch erfolgt, daß die E-POOL Benutzerscheckkarten in die Scheckkarten Leser 9'-2 an der Außenkontour gesteckt werden, die konzentrischen Ringkörper 1-16 in Richtung der Zugriffsöffnungen 1-20 einschwenken und sich der für den Besteller reservierte Zugriffssektor zu den konzentrischen Ringkörpern 1-16 öffnet und der E-POOL Benutzer freien Zugriff zu seiner Bestellung, zu seinem Einkaufscontainer 1-24 und seinen Waren in den Fachablagen des reservierten Zugriffsektors erhält.

9. Multiblock-Robot System, nach einem der Ansprüche 1-8, dadurch gekennzeichnet, daß die E-POOL Satelliten (9'-32) aus Multiblock-Normteilen (2-1) mit zugehörigen Drehflansch-Steckverbindungen (2-2) zusammengesteckt sind und mit schwenkbaren Multiblock-Solareinheiten (9'-25) und Multiblock-Antenneneinheiten (9'-3) ausgerüstet sind, daß die E-POOL Transportbaugruppen mit schwenkbaren Dachsolareinheiten (9'-25) ausgerüstet sind, die in Standposition über Multiblock-Robot Schwenkarme (9'-14) kontinuierlich so eingeschwenkt werden, daß die Sonneneinstrahlung immer energienutzungsoptimal, senkrecht zur Oberfläche der schwenkbaren Dachsolareinheiten (9'-25) auftrifft und daß bei Anfahrt der Fahrzeuge, die schwenkbaren Dachsolareinheiten 9'-25 wieder in die Ausgangsposition, flach über dem Fahrzeugdach zurückgeschwenkt sind, daß die Verteil- und Produktionsbaugruppen kreisförmige Dachsolareinheiten (9'-25) mit Multiblock-Robotschwenkarmen (9'-14) erhalten und integrierte Antenneneinheiten (9'-3), die für den optimalen Datenaustausch mit E-POOL Satelliten (9'-32), durch den gesondert installierten Multiblock-Robotschwenkarm (9'-14), unabhängig vom Bewegungsablauf der kreisförmigen Dachsolareinheiten (9'-25), individuell schwenkbar sind und daß außerdem horizontal schwenkbare Segmentsolareinheiten (9'-26) mit Neigungswinkel zur Sonneneinstrahlung, am Außenurnfang vorgesehen sind.
